# FASCICULE DE BREVET EUROPEEN

(11) **EP 3 728 991 B1**
(45) Date de publication et mention de la délivrance du brevet: **02.03.2022**
(21) Numéro de dépôt: 18829986.1
(22) Date de dépôt: 29.11.2018
(51) Int. Cl.: G01B 11/03, B23Q 17/22

(54) **MACHINE-OUTIL AVEC UN DISPOSITIF DE MESURE OPTIQUE POUR LE REPERAGE TRIDIMENSIONNEL ENTRE LE PORTE-OUTIL ET LE SUPPORT DE PIECE ET PROCEDE DE MESURE OPTIQUE TRIDIMENSIONNELLE CORRESPONDANT**
WERKZEUGMASCHINE MIT OPTISCHER MESSVORRICHTUNG ZUR DREIDIMENSIONALEN REFERENZIERUNG ZWISCHEN DEM WERKZEUGHALTER UND DEM WERKSTÜCKTRÄGER UND ENTSPRECHENDES DREIDIMENSIONALES OPTISCHES MESSVERFAHREN
MACHINE TOOL WITH OPTICAL MEASUREMENT DEVICE FOR THREE-DIMENSIONAL REFERENCING BETWEEN THE TOOL HOLDER AND THE WORKPIECE SUPPORT AND CORRESPONDING THREE-DIMENSIONAL OPTICAL MEASUREMENT METHOD

(30) Priorité: 22.12.2017 CH 16022017; 22.12.2017 CH 16032017
(43) Date de publication de la demande: 28.10.2020
(73) Titulaire: LDI Finances, 74300 Thyez (FR)
(72) Inventeur: JACOT, Philippe, 2022 Bevaix (CH); LAPORTE, Sébastien, 74300 Thyez (FR); PERRET, Frédéric, 74940 Annecy-le-Vieux (FR)
(74) Mandataire: P&TS SA (AG, Ltd.)
(86) Numéro de dépôt international: PCT/IB2018/059463
(87) Numéro de publication internationale: WO 2019/123058

(56) Documents cités:
- JP-A- H05 332 743
- JP-A- H07 246 547
- US-A1- 2011 157 603
- US-A1- 2014 343 890

## Description

### Domaine technique

La présente invention concerne le domaine des machines-outils. La présente invention concerne également le domaine de la mesure optique de la position relative entre un premier objet et un deuxième objet, et notamment entre le porte-outil et le support de pièce d'une machine-outil.

Dans le domaine de la machine-outil, réalisant notamment un usinage par enlèvement de matière, il existe un besoin de connaître précisément la position relative entre le porte-outil et le support de pièce, afin d'assurer une gamme d'usinage conforme au plan d'usinage développé pendant la mise au point.

La fabrication de pièces au moyen de modules d'usinage (machines-outils), notamment de décolleteuses, de tours automatiques, de centres de tournage-fraisage, de fraiseuses, de centres d'usinage et de machines transferts, comporte typiquement trois phases distinctes :

Dans une première phase de mise au point (ou préréglage), l'opérateur (par exemple un décolleteur) définit et teste sur un module d'usinage le plan d'usinage, c'est-à-dire la succession d'opérations et de déplacements d'axes nécessaires pour obtenir la pièce à usiner désirée. L'opérateur veille par exemple à obtenir le plan d'usinage le plus efficace possible, c'est-à-dire celui qui permet d'usiner une pièce donnée avec un minimum d'opérations et en évitant les collisions entre outils ou avec la pièce. Il choisit les outils à employer, et vérifie la qualité des pièces obtenues, par exemple les états de surface, le respect des tolérances, etc.

Dans une deuxième phase de production, une série de pièces sont produites sur le module d'usinage préréglé, avec les paramètres définis lors de la mise au point. Cette phase est la seule phase productive ; elle est souvent effectuée 24h sur 24, le module d'usinage étant alimenté en matière brute au moyen d'un ravitailleur ou d'un chargeur de lopins (pièces brutes).

Il arrive que la production d'une série de pièces soit interrompue, par exemple pour remplacer les outils usés, pour produire un autre type de pièces sur le même module d'usinage, pour la maintenance de la machine, etc, puis reprise ultérieurement. Dans un tel cas, une phase de mise en train est nécessaire pour appliquer les paramètres définis précédemment lors de la mise au point. Cette mise en train est plus rapide que la mise au point.

Lors de la mise en train, il est souvent nécessaire de remplacer les outils montés sur la machine par un autre jeu d'outils adaptés à l'usinage qui doit être effectué. La précision du positionnement de ces outils détermine la qualité de l'usinage, mais est difficile à reproduire lors de mises en train successives.

De plus, pendant la phase de production, il n'est pas impossible d'avoir au fur et à mesure de l'usinage de nouvelles pièces, et en particuliers pour de grandes séries, des dérives de position entre le porte-outil et le support de pièce, dérives notamment dues à la dilatation thermique des machines.

### Etat de la technique

Différentes solutions ont donc été proposées dans l'art antérieur afin de garantir un positionnement relatif correct entre le porte-outil et le support de pièce pendant la phase de production et pendant la mise en train, c'est-à-dire conforme à la position relative entre le porte-outil et le support de pièce pendant la mise au point.

De nombreuses techniques de mesure in-situ utilisées dans des machines-outils s'attachent à mesurer la position relative entre la pièce ou le support de pièce et l'outil lui-même. Cependant, dans ce cas, la mesure de la position relative entre la pièce ou le support de pièce et l'outil est entachée des effets de l'usure de l'outil et de la dérive thermique de la machine-outil pendant son fonctionnement.

Egalement, ce type de mesure de position relative est en général effectué, dans deux dimensions, c'est-à-dire selon deux directions, comme dans le document DE202016004237U.

Ce repérage relatif entre la pièce ou le support de pièce et l'outil étant limité à deux dimensions (par exemple Y et X, respectivement la direction latérale et verticale), il n'est pas suffisamment complet pour s'assurer de la bonne position relative, de sorte que l'on doit recourir à une autre technique pour la mesure de la troisième dimension (par exemple Z, la direction d'avancée/de recul du support de pièce encore appelée « direction matière »). Cette situation augmente non seulement le coût de la technique de mesure, mais aussi son temps de mise en oeuvre, et elle ajoute par ailleurs une erreur par le fait d'utiliser deux séries de mesure simultanément.

Le document US2014362387 A divulgue un dispositif de mesure optique placé sur le porte outil et permettant de vérifier qu'un objet cible ne va pas interférer avec le porte-outil. Ce dispositif de mesure optique utilise un élément de calibrage avec plusieurs parties inclinées pour caractériser les paramètres géométriques du dispositif de mesure par rayon laser, notamment la position entre le capteur du rayon réfléchi et l'émetteur du rayon incident. Cet élément de calibrage n'intervient pas pendant la mesure de la position relative entre le porte-outil et l'objet cible qui peut être une pièce à usiner.

Le document US2010111630 A divulgue un système de repositionnement d'outil pour une machine-outil, comprenant des cibles de forme irrégulière situées sur l'outil et permettant la mesure optique de la position précise de l'outil par des éléments de mesure optique dont la position n'est pas précisée.

Le document US5831734 décrit une solution dans laquelle un capteur optique est solidaire du porte-outil et effectue le repérage de la position relative de ce porte-outil par rapport à une pièce à usiner munie d'une marque distinctive (rainure).

Le document JP07246547 propose une machine-outil qui est équipé d'un réflecteur installé sur un arbre de montage d'outil, et d'un dispositif de mesure avec plusieurs interféromètres laser apte à repérer la position du réflecteur.

Ces solutions ne permettent toutefois pas de pouvoir déterminer par une seule étape de prise de vue la position relative entre la pièce à usiner et l'outil, cette unique étape de prise de vue donnant les informations permettant de déterminer cette position relative dans les trois dimensions de l'espace.

Ces solutions ne permettent pas non plus de s'affranchir des paramètres variables en temps réel au cours de l'usinage, notamment de l'usure de l'outil ainsi que des variations thermiques de l'outil et/ou de l'espace de travail de la machine-outil qui reçoit la pièce à usiner.

### Bref résumé de l'invention

Un but de la présente invention est de proposer une technologie permettant d'effectuer une mesure de position relative entre un porte-outil et un support de pièce, exempte des limitations des techniques de mesure connues.

Un autre but de l'invention est de proposer une technologie permettant d'effectuer une mesure de position relative entre un porte-outil et un support de pièce, qui fournisse la position relative tridimensionnelle entre le premier objet et le deuxième objet à partir d'une seule étape de prise de vue.

Selon l'invention, ces buts sont atteints notamment au moyen d'une machine-outil comprenant un module d'usinage équipé d'un porte-outil et d'un support de pièce, et un dispositif optique de mesure pour la mesure tridimensionnelle de la position relative entre ledit porte-outil et ledit support de pièce, ledit dispositif optique de mesure comprenant un système optique avec un système d'acquisition d'images, monté sur le support de pièce et une cible montée sur le porte-outil et comprenant une face utile formant une référence de positionnement apte à se placer dans l'axe optique du système optique.

Selon l'invention, le dispositif optique de mesure est configuré pour permettre par une unique étape de prise de vue de la cible par le système optique de déterminer la position relative tridimensionnelle entre le support de la pièce à usiner et le porte-outil. De cette façon, on peut obtenir par la prise de vue de la cible réalisée par le système optique de la position exacte entre ledit porte-outil et ledit support de pièce. Cette prise de vue correspond à la prise d'image(s) de la cible par le système optique, à savoir l'acquisition, la captation ou l'enregistrement d'une ou plusieurs images de la cible. En particulier, selon une possibilité, le système optique est apte à prendre simultanément une première image et une deuxième image de la cible. Ces deux images (paire d'images) contiennent des informations sur la position relative entre la cible et le système optique, lesquelles informations permettent d'obtenir la position relative dans les trois directions de l'espace (notamment en X, Y et Z) entre la cible et le système optique. Selon une variante, le système optique est apte à prendre une succession de paires d'images de la cible.

En particulier, la cible est disposée de sorte que le plan focal image du système optique puisse être confondu avec la face utile de la cible.

Selon l'invention, la cible est une cible tridimensionnelle comprenant sur une face utile :
* une première structure définissant une face de référence plane, et
* une deuxième structure présentant une face inclinée par rapport à ladite face plane de référence,
et ledit système optique comprend un premier système de prise de vue et un deuxième système de prise de vue, dans lequel la différence entre la distance focale du deuxième système de prise de vue et la distance focale du premier système de prise de vue, est comprise entre la distance minimale et la distance maximale séparant la face de référence de la face inclinée.

Ainsi, le système optique peut identifier simultanément sa position par rapport d'une part à la face de référence (ou première face de référence) via l'image générée par le premier système de prise de vue et d'autre part à au moins une zone de la face inclinée (ou deuxième face de référence) qui est identifiée via l'image générée par le premier système de prise de vue, et dont la localisation sur la cible est connue par rapport à la face de référence.

Selon l'invention, la face de référence plane est répartie entre au moins une première portion dont la surface est réfléchissante selon des premiers paramètres de réflexion, et une deuxième portion dont la surface est réfléchissante selon des seconds paramètres de réflexion différents des premiers paramètres de réflexion. Cette cible est en outre possiblement conforme à l'une ou l'autre ou plusieurs des dispositions suivantes :
- la surface de ladite première portion est réfléchissante selon une réflexion diffuse, et la surface de ladite deuxième portion est réfléchissante selon une réflexion spéculaire ;
- ladite deuxième portion est répartie selon une série de zones localisées positionnées dans la première portion ;
- la surface de ladite face inclinée présente des éléments en relief ou bien des éléments spéculaires régulièrement répartis;
- les zones localisées définissent entre elles une figure géométrique appartenant à la liste suivante : quadrilatère, parallélogramme, rectangle, carré, losange, polygone régulier et cercle ;
- les zones localisées de ladite deuxième portion sont formée d'îlots ou de segments répartis dans la première portion ;
- les zones localisées sont en chrome ;
- la première structure et la deuxième structure sont disposées sur la face utile de manière concentrique l'une par rapport à l'autre, notamment la première structure entoure la deuxième structure ;
- les zones localisées de la deuxième portion de la première structure définissent un carré qui entoure la deuxième structure ;
- la première structure délimite une ouverture pour un logement logeant ladite deuxième structure ;
- la deuxième structure est disposée dans ledit logement avec la face inclinée qui est en retrait par rapport à la face de référence de ladite première structure, notamment en arrière, derrière le plan délimité par la face de référence ;
- la surface de la face inclinée de la deuxième structure est striée, en particulier la surface de la face inclinée de la deuxième structure est recouverte par l'un des éléments suivants : réseau gravé, grille structurée ou réseau de lignes spéculaires.

Selon un mode de réalisation, la surface de cette face inclinée présente des éléments en relief régulièrement répartis. Selon un autre mode de réalisation, la surface de cette face inclinée présente des éléments spéculaires régulièrement répartis. Dans les deux cas, l'idée est de pouvoir repérer la face inclinée, qui est grossièrement plane, dans une direction Z orthogonale à la face de référence. Pour ce faire, dans un cas, les éléments en relief constituent des irrégularités de surface ou aspérités de petite taille, la surface de la face inclinée étant rugueuse et permettant de former une réflexion diffuse qui permet à un système optique qui regarde la cible de voir nette une portion de la face inclinée : en particulier ces éléments en relief présentent une taille supérieure à 700 nanomètres, notamment supérieure à 1 micromètre, à savoir de taille supérieure à la longueur d'onde du rayonnement incident, ici la lumière naturelle. Dans l'autre cas, les éléments spéculaires de la face inclinée, disposés selon un arrangement géométrique, par exemple selon des lignes parallèles entre elles et positionnées à différentes positions selon la direction Z, se distinguent visuellement du reste de la surface de la face inclinée (de préférence réfléchissante selon une réflexion diffuse), d'où la possibilité à un système optique qui regarde la cible de voir nette une portion de la face inclinée avec un ou plusieurs de ces éléments spéculaires.

Cette cible tridimensionnelle dispose sur son côté formant la face utile d'une double structure, définissant respectivement une première face de référence plane et une deuxième face de référence, définissant un plan incliné par rapport à la première face de référence. Cette géométrie tridimensionnelle de la cible, alliée à des caractéristiques optiques spécifiques et différentes des surfaces composant respectivement la première face de référence et la deuxième face de référence, permettent un repérage optique dans les trois dimensions X, Y et Z de l'espace de cette cible par rapport au système optique utilisé. Dans un mode de réalisation ce système optique permet de réaliser ce repérage optique, à savoir aboutissant à la mesure de position relative, grâce à une seule étape de prise de vue à la fois de la première face de référence plane et de la deuxième face de référence inclinée : il s'agit donc d'une prise de vue simultanée de l'image de la première face de référence plane et de la deuxième face de référence. Cette prise de vue simultanée peut être réalisée selon deux, trois ou davantage d'itérations, voir en rafale sur n prises de vue (n entier supérieur à un, par exemple allant de deux à quinze). De cette façon, on peut disposer de plusieurs images (une série d'images) à la fois de la première face de référence plane et de la deuxième face de référence, ce qui permet d'effectuer un traitement par des algorithmes de calcul, non pas d'une seule image de la première face de référence plane et de la deuxième face de référence, mais un traitement de la série d'images à la fois de la première face de référence plane et de la deuxième face de référence, et ainsi gagner en précision.

En particulier, selon une disposition possible, cette génération d'image(s) de la première face de référence plane et de la deuxième face de référence, est effectuée par le système optique utilisé sans avoir à réaliser une mise au point, comme il sera exposé plus loin. Dans ce cas, il n'y a pas de réglage spécifique à opérer dans le système optique, ce qui permet un gain de temps important pour la réalisation de la mesure de la position relative de la cible tridimensionnelle. Cette solution présente notamment l'avantage par rapport à l'art antérieur de ne pas nécessiter ni plusieurs étapes de mesure ni même de modifier les réglages et en particulier la distance focale du système optique qui regarde cette cible.

Également, lorsque cette cible est utilisée pour la mesure de position relative entre un porte-outil et un support de pièce, on peut s'affranchir de l'usure de l'outil ainsi que des variations thermiques de l'outil et/ou de l'espace de travail de la machine-outil qui reçoit la pièce à usiner en plaçant cette cible sur le porte-outil.

Dans un mode de réalisation, le système optique comprend un premier système de prise de vue et un deuxième système de prise de vue , dans lequel :
- la profondeur de champ du premier système de prise de vue est au moins 10 fois supérieure à la profondeur de champ du deuxième système de prise de vue, et
- le système optique est agencé de sorte que le chemin optique du premier système de prise de vue et le chemin optique du deuxième système de prise de vue présentent un tronçon commun placé sur l'axe optique du système optique et comportant le plan focal image du premier système de prise de vue et le plan focal image du deuxième système de prise de vue.

Un tel système optique peut être placé sur l'un des deux objets concernés (un deuxième objet formé d'un support de pièce) et permet par les deux systèmes de prise de vue, une prise simultanée de deux images nettes en deux emplacements voisins l'un de l'autre sur l'autre parmi les deux objets (un premier objet formé d'un porte-outil), ces deux emplacements du premier objet étant situés à une distance légèrement différente du deuxième objet. Un tel système optique permet, comme il sera décrit en détail dans la suite, grâce aux deux images, de repérer de façon tridimensionnelle la position relative entre le premier objet et le deuxième objet qui porte le système optique.

Dans un mode de réalisation, le système optique est agencé de sorte que le chemin optique depuis l'objet (premier objet) traverse au moins une portion de l'un parmi le premier et le deuxième système de prise de vue avant d'atteindre l'autre parmi le premier et le deuxième système de prise de vue. De cette façon, on peut disposer d'un tronçon de chemin optique en entrée/sortie du système optique qui est commun ou très proche pour le premier et le deuxième système de prise de vue. on peut ainsi non seulement regrouper le premier et le deuxième système de prise de vue sur le même système optique mais aussi pouvoir repérer deux emplacements voisins l'un de l'autre sur le premier objet, qui sont proches de quelques dizaines de millimètres, voire de quelques millimètres, voire moins d'un millimètre.

Dans un mode de réalisation, le premier et le deuxième système de prise de vue sont disposés en parallèle l'un par rapport à l'autre et le système optique comporte en outre un module optique disposé entre le premier et le deuxième système de prise de vue et configuré pour dévier une partie des rayons lumineux traversant au moins une partie de l'un parmi le premier et le deuxième système de prise de vue vers l'autre parmi le premier et le deuxième système de prise de vue : selon une possibilité, ce module optique est ou comporte un système optique catoptrique tel qu'un miroir.

Ce système optique est en outre possiblement conforme à l'une ou l'autre ou plusieurs des dispositions suivantes :
- la distance focale du deuxième système de prise de vue est plus grande que la distance focale du premier système de prise de vue,
- le grandissement du premier système de prise de vue est inférieur ou égal au grandissement du deuxième système de prise de vue,
- la profondeur de champ (DOF1) du premier système de prise de vue est supérieure ou égale à 0.8 millimètre,
- la profondeur de champ (DOF2) du deuxième système de prise de vue est inférieure ou égale à 0.1 millimètre,
- le premier système de prise de vue est télécentrique et le deuxième système de prise de vue est télécentrique,
- le premier système de prise de vue est configuré de sorte que son plan focal image est apte à correspondre à la face de référence de la première structure, et
- le deuxième système de prise de vue est configuré de sorte que son plan focal image est apte à être sécant avec la face inclinée de la cible tridimensionnelle,
- le dispositif optique comporte en outre un troisième système de prise de vue disposé sur le porte-outil et configuré pour repérer l'orientation de la face utile de la cible et/ou l'orientation angulaire du porte-outil.

La présente invention se rapporte aussi à un procédé de mesure optique tridimensionnelle selon trois directions orthogonales X, Y et Z dans l'espace tridimensionnel d'une machine-outil, entre un porte-outil et un support de pièce alignés et distants l'un de l'autre dans la direction principale Z, dans lequel :
- on fournit un système optique avec un système d'acquisition d'images,
- on monte ledit système optique sur le support de pièce,
- on fournit une cible comprenant une face utile formant une référence de positionnement,
- on monte ladite cible sur le porte-outil ,
- on positionne le porte-outil et le support de pièce de sorte que la cible est apte à se placer dans l'axe optique du système optique,
- on réalise une unique étape de prise de vue de la cible avec le système optique disposé de façon à coopérer avec la cible ce par quoi on détermine la position relative tridimensionnelle entre le support de la pièce à usiner et le porte-outil.

Selon un mode de réalisation de ce procédé, lors de l'étape de prise de vue, le système optique et la cible sont disposés de sorte que le plan focal image du système optique puisse être confondu avec la face utile de la cible.

Selon l'invention, ce procédé présente les dispositions suivantes :
- ladite cible est tridimensionnelle, et comprend sur une face utile :
   * une première structure définissant une face de référence plane répartie entre au moins :
      - une première portion dont la surface est réfléchissante selon une réflexion diffuse, et
      - une deuxième portion dont la surface est réfléchissante selon une réflexion spéculaire, et
   * une deuxième structure présentant une face inclinée par rapport à ladite face plane de référence,
- ledit système optique comprend un premier système de prise de vue et un deuxième système de prise de vue,
- on positionne le porte-outil et le support de pièce de sorte que d'une part la distance focale du premier système de prise de vue est apte à placer le foyer image du premier système de prise de vue sur la première structure de la cible et que d'autre part la distance focale du deuxième système de prise de vue est apte à placer le foyer image du deuxième système de prise de vue sur la deuxième structure de la cible,
- lors de ladite étape de prise de vue avec le système optique, on effectue au moins une prise de vue simultanément avec le premier système de prise de vue du système optique et avec le deuxième système de prise de vue du système optique, ce par quoi, pour chaque prise de vue par le système optique, d'une part le premier système de prise de vue génère une première image de la cible permettant d'identifier sur la face de référence la position de la deuxième portion par rapport à la première portion, ce qui donne en premier lieu une première information sur la position relative selon la direction X de la cible par rapport au premier système de prise de vue et en second lieu une deuxième information sur la position relative entre la cible et le premier système de prise de vue selon la direction Y, et d'autre part le deuxième système de prise de vue génère une deuxième image de la cible comprenant une portion nette correspondant à un emplacement de la face inclinée de la deuxième structure, ce qui donne une troisième information sur la distance entre ladite cible et ledit deuxième système de prise de vue selon la direction Z.

Selon ce procédé, on peut prévoir en outre, la disposition suivante :
- dans le système optique :
- la profondeur de champ du premier système de prise de vue est au moins 10 fois supérieure à la profondeur de champ du deuxième système de prise de vue, et
- ledit système optique est agencé d'une part de sorte que le chemin optique du premier système de prise de vue et le chemin optique du deuxième système de prise de vue présentent un tronçon commun comportant le plan focal image du premier système de prise de vue et le plan focal image du deuxième système de prise de vue, et d'autre part de sorte que la différence entre la distance focale du deuxième système de prise de vue et la distance focale du premier système de prise de vue, est comprise entre la distance minimale et la distance maximale séparant la face de référence de la face inclinée.

Selon une autre disposition possible, ladite deuxième portion de la face de référence plane est répartie selon une série de zones localisées positionnées dans la première portion et dans lequel lorsque ledit premier système de prise de vue génère une première image de la cible, la position des zones localisées de la deuxième portion est identifiée sur la face de référence, ce qui donne une information sur la position relative entre lesdites zones localisées et le premier système de prise de vue permettant de déduire la mesure relative selon la direction Y et selon la direction X.

### Brève description des figures

Des exemples de mise en oeuvre de l'invention sont indiqués dans la description illustrée par les figures annexées dans lesquelles :
- La figure 1 illustre un dispositif de mesure tridimensionnelle comprenant une cible tridimensionnelle et un système optique,
- La figure 2A illustre l'utilisation du dispositif de mesure tridimensionnelle de la figure 1 dans une machine-outil selon l'invention pour la mesure dans l'espace de la position relative entre le porte-outil et le support de pièce (encore appelée broche matière),
- La figure 2B montre la partie de la figure 2A correspondant au porte-outil avec la cible tridimensionnelle, depuis la direction IIB de la figure 2A, soit selon la direction Z, comme le voit le système optique lorsque la cible est orientée en direction du système optique,
- les figures 3A, 3B et 3C sont trois vues illustrant la structure de la cible tridimensionnelle, respectivement de face, en perspective et en coupe, et les figures 3D et 3E sont des vues en perspective de la deuxième structure de la cible respectivement telle que sur les figures 3A, 3B et 3C et selon une variante de réalisation,
- les figures 4A et 4B illustrent le traitement de l'image générée par le deuxième système de prise de vue du système optique,
- la figure 5 représente en perspective et en éclaté un porte-outil équipé de la cible tridimensionnelle,
- la figure 6 illustre le montage du dispositif de mesure optique tridimensionnelle dans une machine-outil selon l'invention.

### Exemple(s) de mode de réalisation de l'invention

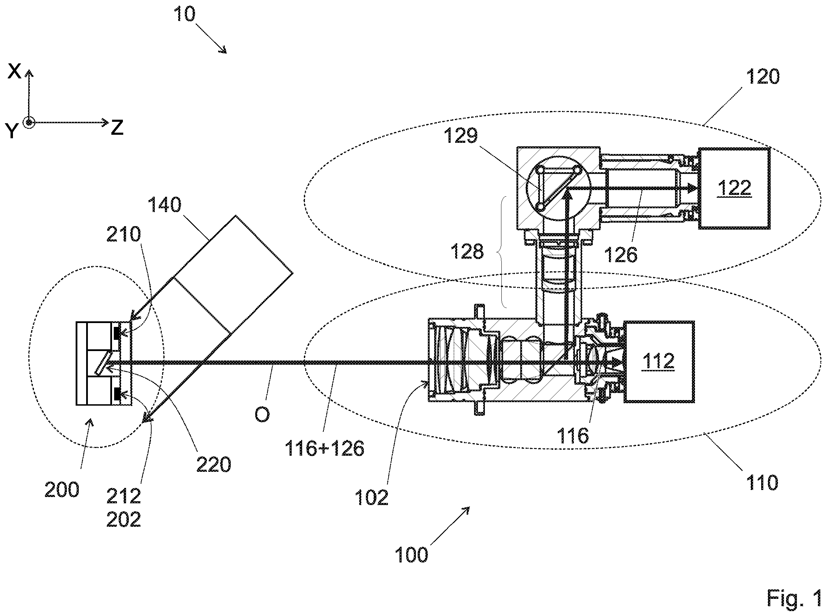

Sur la figure 1, est représenté un dispositif optique 10 comportant un système optique 100 et une cible tridimensionnelle 200 aptes à coopérer ensemble pour effectuer la mesure tridimensionnelle de la position relative entre la cible 200 et le système optique 100. En effet, dans cette position de mesure la cible 200 est orientée en direction du système optique 100, parallèlement à un axe principal, formant une direction Z horizontale principale. A cet effet, à la sortie du système optique 100 le chemin optique O est orthogonal à une face utile 202 de la cible 200.

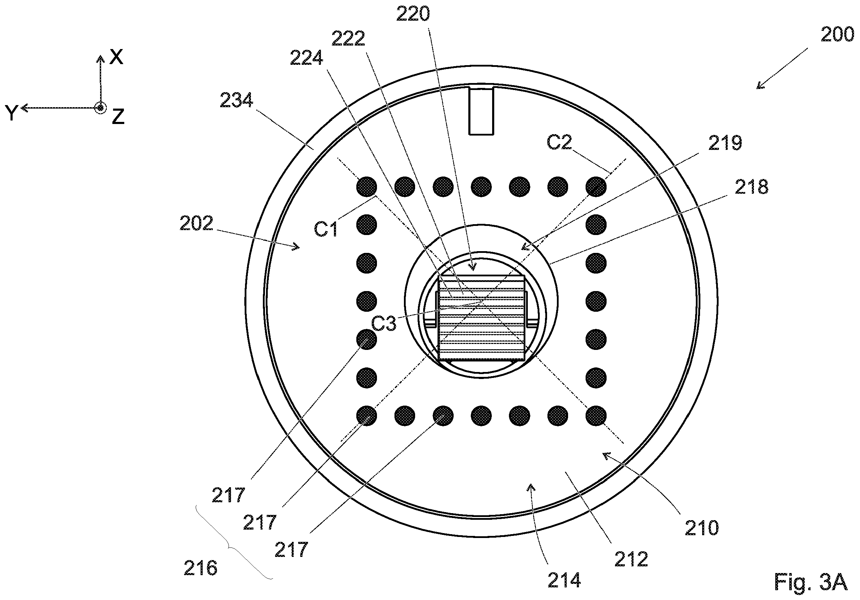

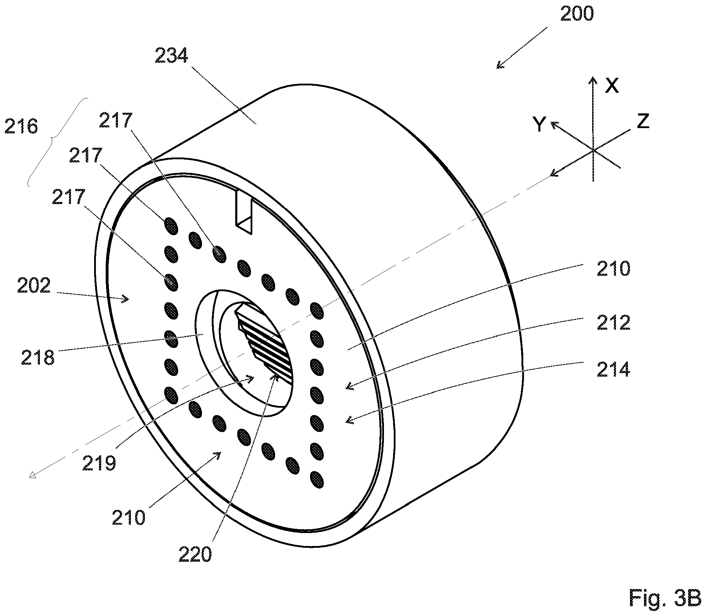

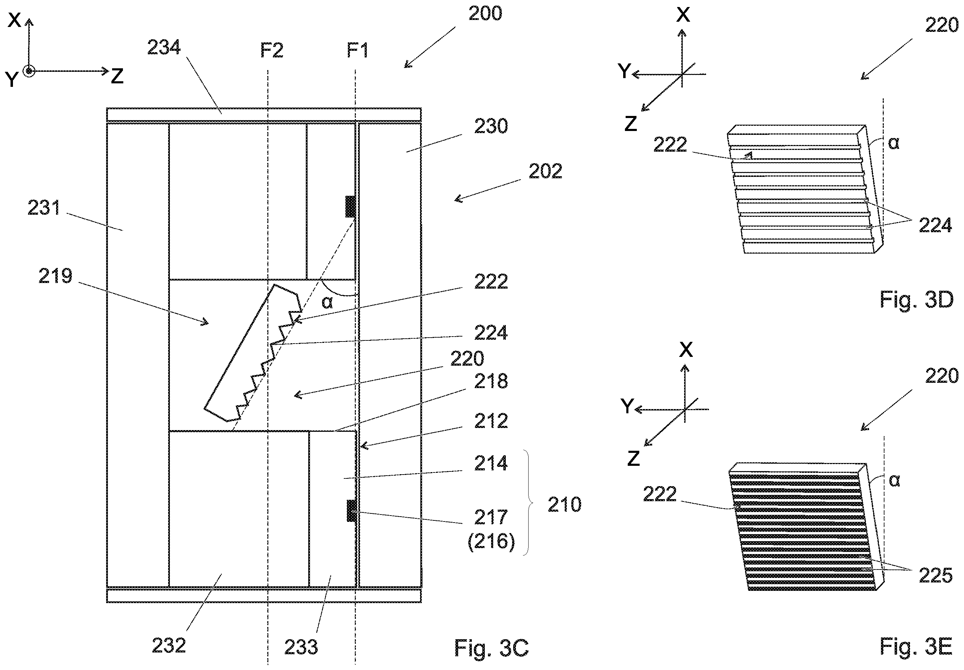

La cible 200 est maintenant décrite en relation avec les figures 1, 3A, 3B et 3C. La cible 200 se présente sous forme d'une pastille, ici de forme cylindrique de section circulaire (elle pourrait être de section carrée ou autre), dont un côté forme la face utile 202 pour la réalisation de la mesure. Pour la réalisation de la mesure, cette face utile 202 est donc tournée vers le système optique 100, et en particulier vers la face d'entrée 102 du système optique 100, l'axe Z correspondant à la direction principale (horizontale sur les figures) séparant la face utile 202 de la face d'entrée 102 du système optique 100.

La surface de la face utile 202 de la cible 200 se répartit entre une première structure 210 et une deuxième structure 220. La première structure 210 comporte une face de référence plane 212 dont la surface est lisse et se répartit entre une première portion 214 dont la surface est réfléchissante selon une réflexion diffuse et une deuxième portion 216 dont la surface est réfléchissante selon une réflexion spéculaire. Dans un mode de réalisation la première portion 214 est revêtue d'une couche réfléchissante diffusante, par exemple en sulfate de baryum BaS04, et la deuxième portion 216 est formée d'une couche réfléchissante selon une réflexion spéculaire, par exemple en chrome. Dans le mode de réalisation illustré, la deuxième portion 216 est constituée de plusieurs zones localisées 217 en forme de cercles formant des îlots disposés au sein de la première portion 214 qui est continue. Ces zones localisées 217 peuvent présenter d'autres formes, telles que des segments ou des îlots d'autres forme qu'un cercle. Ces zones localisées 217 définissent entre elles une figure géométrique appartenant à la liste suivante : quadrilatère, parallélogramme, rectangle, carré, losange, polygone régulier et cercle. Cette figure géométrique peut être une figure géométrique à symétrie centrale. Sur les figures 3A et 3B, vingt-quatre zones localisées 217 circulaires sont disposées en carré. Le but de cette première structure 210 est de pouvoir en identifier précisément son centre C3 à l'aide d'outils standards de vision. Avec la forme carrée, les deux diagonales C1 et C2 de ce carré sont sécantes au centre du carré. A noter que dans la position de mesure, telle que représentée sur les figures 1 à 3 et 5, la face de référence 212 est disposée parallèlement aux directions X et Y, formant respectivement une direction (un axe) verticale et une direction (un axe) horizontale transversal dans le cas de l'agencement illustré.

La deuxième structure 220 comporte une face inclinée 222 par rapport à la face de référence 212 : cette face inclinée 222 est essentiellement plane, le plan moyen de cette face inclinée formant par rapport à la face de référence 212 un angle α aigu compris entre 10 degrés et 80 degrés, par exemple entre 20 et 30 degrés, et de préférence de l'ordre de 25 degrés (voir la figure 3C).

Dans un mode de réalisation, la surface de cette face inclinée 222 n'est pas lisse mais présente des éléments de relief 224 formant des irrégularités de surface soit aléatoire ou bien selon une géométrie prédéterminée, par exemple dessinant entre elles une forme de grille ou un réseau de lignes, constituant ainsi une grille structurée (non représentée) ou un réseau de lignes structuré (voir la figure 3D).

De tels éléments de relief 224 peuvent être en saillie ou en creux, c'est-à-dire en retrait, par rapport au plan moyen de la face inclinée 222, notamment sous la forme de petites rugosités, ou toute autre irrégularité de surface. De tels éléments de relief 224 peuvent être présents sur toute la surface de la face inclinée 222. De tels éléments de relief 224 peuvent être régulièrement répartis sur toute la surface de la face inclinée 222. Par exemple, ces éléments de relief 224 peuvent former un ensemble délimitant un motif de grille ou de réseau, ou plus généralement une surface structurée ou une surface rugueuse qui permet de bien faire diffuser la lumière réfléchie sur cette face inclinée 222. La surface de la face inclinée 222 de la deuxième structure 222 est par exemple recouverte par l'un des éléments suivant réseau gravé ou grille structurée, avec un pas entre les motifs de la grille ou du réseau compris entre 5 et 100 micromètres, notamment entre 5 et 50 micromètres, et notamment entre 8 et 15 micromètres, par exemple de l'ordre de 10 micromètres.

Par exemple, cette face inclinée 222 est en silicium non poli ou bien en céramique, ou en métal non poli ou en verre, ou tout autre matériau structurable, et les éléments en reliefs 224 ont été obtenus par photolithographie, usinage par enlèvement de copeaux, écriture directe, etc...ou tout autre procédé de structuration . Ces éléments en reliefs 224 forment par exemple des dépressions et/ou des saillies respectivement en retrait/dépassant du plan moyen de quelques micromètres ou de quelques dizaines de micromètres, notamment entre 0.5 et 50 micromètres.

Dans un autre mode de réalisation, comme illustré sur la figure 3E, la surface de cette face inclinée 222 est lisse et comporte un réseau de lignes de chrome, ou d'un autre matériau entraînant une réflexion spéculaire de ces lignes de chrome qui constituent des éléments spéculaires 225. Ces éléments spéculaires 225 sous forme de lignes sont disposés parallèlement entre eux. Dans la position de mesure, ces éléments spéculaires 225 sous forme de lignes ou bandes sont disposés parallèlement au plan Y, Z, de sorte que le long de la surface inclinée, en direction Z, on rencontre une à une ces lignes (c'est aussi le cas en avançant en direction X). Le substrat formant la plaquette de la deuxième structure 220 peut alors être dans différents matériaux, y compris en verre ou du silicium, avec sur la face inclinée 222 une couche réfléchissante diffusante, par exemple en sulfate de baryum BaSO₄ qui alterne avec les éléments spéculaires 225 ou bien qui recouvre toute la surface de la face inclinée, avec les éléments spéculaires 225 disposés au-dessus de cette couche réfléchissante diffusante. Dans un exemple de réalisation, ces éléments spéculaires 225 sous formes de lignes forment un réseau avec un pas de 25 micromètres, les lignes (notamment de chrome) présentant une largeur de 12.5 micromètres, égale à la largeur de l'interligne ou portion avec une réflexion diffuse se présentant également sous forme de lignes ou de bandes de largeur de 12.5 micromètres. Selon une autre mise en œuvre, on utilise un pas de 10 micromètres ou plus généralement un pas entre 5 et 50 micromètres. Il faut relever que ces éléments spéculaires 225 qui alternent avec le reste de la surface qui réalise une réflexion diffuse, pourraient se présenter sous d'autres formes que des lignes ou segments continu(e)s formant des bandes, notamment des lignes discontinues ou en pointillés, des motifs tels que des frises des points, cercles, triangles, ou toute autre forme géométrique.

Selon un mode de réalisation non illustré, la face inclinée 222 de la deuxième structure 220 porte des éléments de relief 224 ponctuels et saillants, en forme de petits monticules ou picots, lesquels sont répartis en rangées parallèles entre elles, les éléments de relief 224 étant décalés entre eux d'une rangée à l'autre, pour former un motif en quinconce. Selon un autre mode de réalisation non illustré, la face inclinée 222 de la deuxième structure 220 porte des éléments en relief 224 saillants sous forme de segments parallèles entre eux et à égale distance selon deux séries entrecroisées à 90° l'une de l'autre. Cet ensemble d'éléments en relief 224 constitue un motif de grille. A noter que cette grille peut être formée de deux séries de segments parallèle entre eux, avec des séries de segments entrecroisées selon un angle différent de 90° l'une de l'autre. Sur les figures 3A, 3B, 3C et 3D, la face inclinée 222 de la deuxième structure 220 porte des éléments en relief 224 en creux sous forme d'une série de segments parallèles entre eux et à égale distance les uns des autres le long de la direction X : ces éléments en relief 224 forment dans ce cas des rainures. Cette direction X est donc orthogonale à la direction des segments formant les éléments en relief 224.

Dans le mode de réalisation de la figure 3E, la surface de la face inclinée 222 de la deuxième structure 220 est donc recouverte par un réseau de lignes spéculaires 225, à savoir de bandes continues parallèles entre elles dont la surface présente des propriétés de réflexion spéculaire.

Ainsi, dans certains des cas précités, et notamment ceux des figures 3D et 3E, la surface de la face inclinée 222 de la deuxième structure 220 est striée.

Selon les modes de réalisation représentés pour la cible 200, la pastille délimitant la cible 200 comporte sur sa face utile 202 la première structure 210 qui occupe l'essentiel de la surface de la face utile 202, et au sein de la première structure 210, une zone réservée à la deuxième structure 220. Dans cette situation, la première structure 210 entoure la deuxième structure 220. De façon plus précise, les zones localisées 217 de la deuxième portion 216 de la première structure 210 définissent un carré qui entoure la deuxième structure 220. Selon une disposition possible, et dans le cas des modes de réalisation de la cible 200 tels que représentés, la première structure 210 et la deuxième structure 220 sont disposées sur la face utile 202 de manière concentrique l'une par rapport à l'autre. Par ailleurs, comme dans les cas représentés, la première structure 210 délimite une ouverture 218 pour un logement 219 logeant ladite deuxième structure 220, qui est par exemple disposée sur une plaquette présentant la face inclinée 222. Lorsque la plaquette est logée dans le logement 219 de la première structure 210, sa face inclinée 222 est tournée en direction de l'extérieur du logement 219, vers l'ouverture 218. En l'espèce, la deuxième structure 220 est disposée dans ledit logement 219 avec la face inclinée 222 qui se trouve en retrait par rapport à la face de référence de ladite première structure 210 : ceci signifie que la face inclinée 22, donc la deuxième structure 220 est disposée en arrière, derrière le plan délimité par la face de référence 212 (par rapport à la direction principale Z, voir la figure 3B), dans le logement 219, et ce par exemple de 0.05 à 2 millimètres ou bien de l'ordre de 0.15 millimètre. Selon une autre possibilité, non représentée, la deuxième structure 220 est disposée en avant, devant le plan délimité par la face de référence 212. Selon encore une autre possibilité, non représentée, la deuxième structure 220 est disposée de part et d'autre du plan délimité par la face de référence 212 à savoir une partie de la face inclinée 222 est disposée en arrière et l'autre partie de la face inclinée 222 est disposée en avant, par rapport à la face de référence 212.

Afin de protéger la première structure 210 et la deuxième structure 220 de l'environnement (poussières, huile, chocs...), comme visible sur la figure 3C, la cible 200 comprend une plaque de protection 230 dans un matériau transparent, en particulier en verre, recouvrant la première structure 210 et la deuxième structure 220 du côté de la face utile 202. Selon une possibilité de mise en oeuvre, telle que représentée sur la figure 3C, la cible 200 comporte sous forme d'empilement les éléments suivants. Une paroi de fond 231 est surmontée d'une platine 232 formée d'une plaque évidée en son centre afin de délimiter le logement 219 délimité par l'ouverture 218 du côté de la face utile 202. La platine 232 est surmontée de la plaque de protection 230 refermant le logement 219. Le tout est entouré d'une paroi cylindrique 234 retenant l'ensemble de la cible 200. La deuxième structure 220 est par exemple une plaquette de silicium logée dans le logement 219 avec la face inclinée 222 (portant les éléments en relief 224 ou des éléments spéculaires 225) tournée vers la face utile 202. La face de la platine 232 tournée vers la face utile 202 comporte une couche réfléchissante 233 selon deux zones telles que décrites précédemment respectivement en relation avec la première portion 214 (surface réfléchissante selon une réflexion diffuse) et la deuxième portion 216 (surface réfléchissante selon une réflexion spéculaire, en particulier sous forme d'éléments localisés 217).

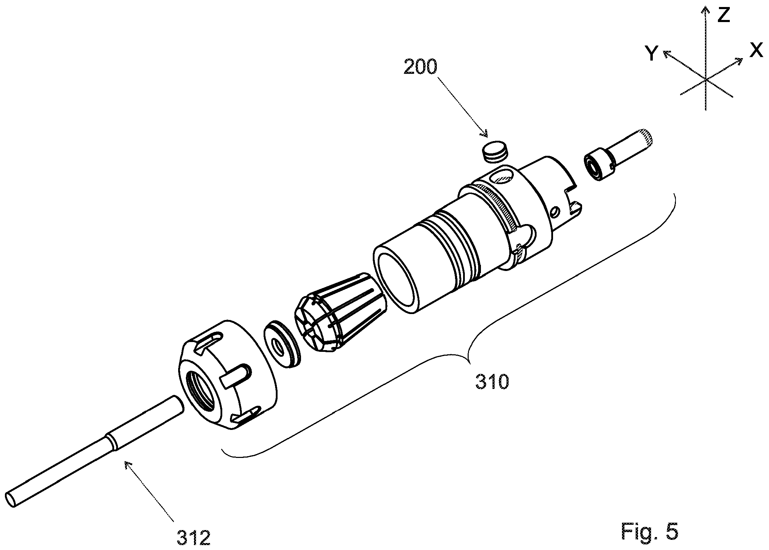

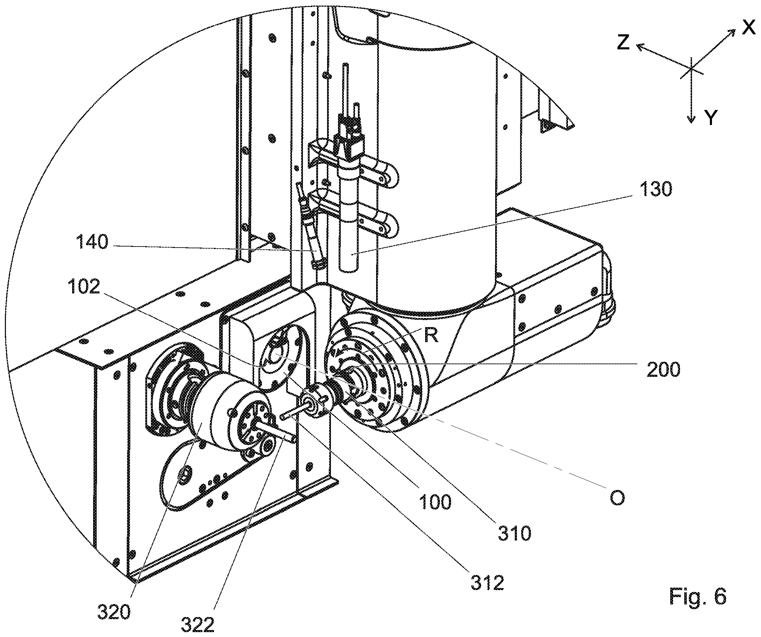

Par ailleurs, la cible 200 peut être équipée d'une puce de type RFID (identification par radiofréquence), non représentée, et ce afin de permettre le stockage et la lecture d'un identifiant unique et de données en relation avec la cible 200 et en relation avec un premier objet sur lequel la cible 200 est destinée à être montée, notamment un porte-outil 310 (voir figures 5 et 6) : par exemple la référence de ce porte outil 310 et d'autres informations liées à l'utilisation de ce porte-outil (par exemple son numéro de série, son type, son réglage par rapport au centre matière ou support de pièce, le nombre de fois où il a été utilisé...).

On se reporte maintenant à la figure 1 pour présenter le système optique 100 associé à la cible 200 qui vient d'être décrite pour former ensemble un dispositif optique 10 permettant la mesure de la position relative entre deux objets selon les trois directions de l'espace. En particulier, on considère un espace orthonormé dans un repère cartésien X, Y et Z, qui est direct sur les figures. Ce système optique 100 est destiné à prendre simultanément, lors de la même séquence de prises de vue, à la fois une image de la première structure 210 de la cible 200 et en même temps une image de la deuxième structure 220 de la cible 200. Selon le présent texte, cette prise de vue simultanée des deux images s'effectue sans mise au point, ce qui permet une grande rapidité d'exécution de cette prise de vue. D'autres caractéristiques, liées notamment à la structure spécifique de la cible 200 qui vient d'être décrite, permettent en outre une précision maximale. La société demanderesse a réalisé un dispositif optique de mesure tridimensionnelle 10 conforme à la présente description parvenant à réaliser en une demi-seconde ou moins une mesure relative répétable avec une précision de un micromètre ou moins.

Ce système optique 100 comprend un premier système de prise de vue 110 et un deuxième système de prise de vue 120. Selon une disposition, ledit système optique 100 est agencé de sorte que la différence entre la distance focale du deuxième système de prise de vue 120 et la distance focale du premier système de prise de vue 110 est comprise entre la distance minimale et la distance maximale séparant la face de référence 212 de la face inclinée 202. Selon une autre disposition, la profondeur de champ DOF1 du premier système de prise de vue 110 est largement supérieure et notamment au moins 10 fois supérieure à la profondeur de champ DOF2 du deuxième système de prise de vue 120. Par exemple la profondeur de champ DOF1 du premier système de prise de vue 110 est entre 10 et 10 000, ou bien encore entre 100 et 5000 fois supérieure à la profondeur de champ DOF2 du deuxième système de prise de vue 120. Parmi différentes possibilités, la profondeur de champ DOF1 du premier système de prise de vue 110 est supérieure ou égale à 0.8 millimètre, ou bien elle est comprise entre 0.5 et 5 millimètres, ou bien elle est comprise entre 0.8 et 3 millimètres, ou bien elle est comprise entre 1 et 2 millimètres. Egalement, selon différentes possibilités, la profondeur de champ DOF2 du deuxième système de prise de vue 120 est inférieure ou égale à 0.1 millimètre, ou bien elle est comprise entre 5 et 50 micromètres, ou bien elle est comprise entre 8 et 30 micromètres, ou bien elle est comprise entre 10 et 20 micromètres.

Ceci permet au premier système de prise de vue 110 de faire naturellement et sans autre réglage, sa mise au point sur toute la face de référence 212 de la première structure 210 dans une gamme de distance entre la cible 200 et le premier système de prise de vue 110 pouvant varier sur quelques millimètres. En parallèle, le deuxième système de prise de vue 120 est apte à faire naturellement et sans autre réglage, sa mise au point sur la portion de la face inclinée 222 de la deuxième structure 210 qui est à la distance du deuxième système de prise de vue 120 correspondant à la distance focale du deuxième système de prise de vue 120. Selon une possibilité, le grandissement du premier système de prise de vue 210 est inférieur au grandissement du deuxième système de prise de vue 220.

Chaque système de prise de vue au sens du présent texte (premier système de prise de vue 210 et deuxième système de prise de vue 220) correspond à un système optique, en particulier un système optique centré, comprenant un ensemble de composants optiques et un système d'acquisition d'images. Un tel système d'acquisition d'images permet de prendre des photographies et/ou des vidéos, et est par exemple une caméra ou un appareil photographique, notamment un appareil photographique numérique. Selon une disposition possible, le premier système d'acquisition d'images 112 du premier système de prise de vue 110 et le deuxième système d'acquisition d'images 122 du deuxième système de prise de vue 120 sont synchronisés afin de prendre simultanément une première image par le premier système de prise de vue 110 et une deuxième image par le deuxième système de prise de vue 120.

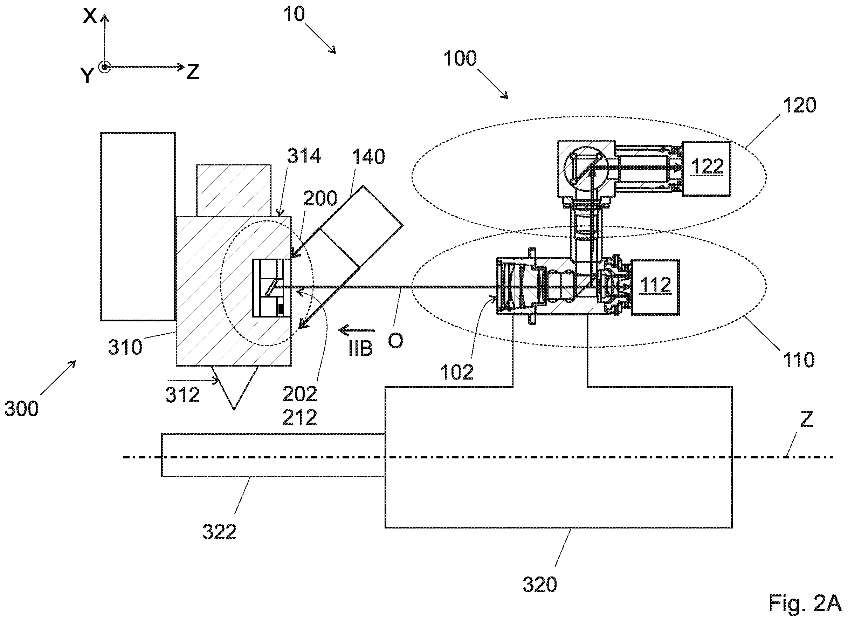

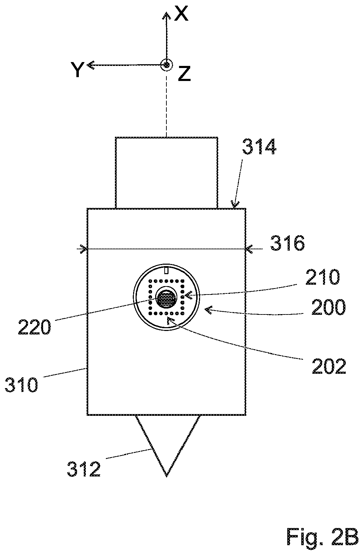

Pour permettre l'accès simultané à la vision de la cible 200 par le premier système de prise de vue 210 et par le deuxième système de prise de vue 220, ces derniers présentent une portion de chemin optique commune qui se dirige vers et provient de l'objet regardé par le système optique 100, en l'occurrence la cible 200 (voir figures 1 et 2) après montage de la cible 200 sur le premier objet et montage du système optique 100 sur le deuxième objet. A cet effet, dans la position de mesure, le premier système de prise de vue 210 est tourné en direction de la face utile 202 de la cible 200 et forme un système de prise de vue aligné avec la cible 200, et le deuxième système de prise de vue 120 présente un chemin optique 126 qui rejoint le chemin optique 116 du système de prise de vue 110 aligné avec la cible 200 et forme un système de prise de vue excentré par rapport à la cible 200, par rapport à l'axe optique O du système optique 100, et par rapport à la portion commune des chemins optiques 116 et 126 (alignée avec la cible) . En d'autres termes, le chemin optique du système de prise de vue aligné avec la cible 200 est sensiblement perpendiculaire avec la face de référence 212. L'axe optique O est superposé avec le rayon moyen de la portion commune du premier chemin optique 116 et du deuxième chemin optique 126. Dans cette portion commune, les tronçons du premier chemin optique 116 et du deuxième chemin optique 126 sont parallèles entre eux, mais pas forcément superposés.

En particulier, comme illustré sur les figures 1 et 2, le premier système de prise de vue 210 est tourné en direction de la face utile 202 de la cible 200, à savoir est orienté de façon perpendiculaire par rapport à la face utile 202 de la cible 200. Ceci signifie que l'axe optique O et la portion commune des chemins optiques 116 et 126 sont alignés avec la cible 200 et sont perpendiculaires à la face utile 202 (et donc à la face de référence 212) de la cible 200. Dans cette configuration, comme on le voit sur les figures 1 et 2, l'axe optique O et la portion commune des chemins optiques 116 et 126 sont parallèles à la direction principale Z, et sont orthogonaux aux directions transversales X et Y, ainsi qu'au plan X, Y.

Dans la portion commune des chemins optiques 116 et 126, les rayons optiques sont au moins en partie confondus ou bien simplement parallèles entre eux. Le deuxième système de prise de vue 120 qui est excentré présente une portion de chemin optique 126 interne à ce deuxième système de prise de vue 120 qui est de préférence parallèle à l'axe optique O. Cette portion de chemin optique 126 interne est reliée au, ou plus précisément rejoint le, chemin optique 116 du premier système de prise de vue 110 aligné par un module optique 128 dédié, comportant un système optique catoptrique tel qu'un miroir 129. De cette façon, l'entrée du système de prise de vue excentré (ici le deuxième système de prise de vue 120) est relié au parcours ou chemin optique du système de prise de vue aligné (ici le premier système de prise de vue 110).

D'une manière plus générale, on conçoit que l'un parmi le premier système de prise de vue 110 et le deuxième système de prise de vue 120 est tourné en direction de la face utile 202 de la cible 200 et forme un système de prise de vue aligné avec la cible 200, et l'autre système de prise de vue parmi le premier système de prise de vue 110 et le deuxième système de prise de vue 120 présente un chemin optique 126 qui rejoint le chemin optique 116 du système de prise de vue 110 aligné avec la cible 200 et forme un système de prise de vue excentré. Ceci signifie que l'autre système de prise de vue présente un axe optique qui passe par la face inclinée 222 c'est-à-dire la deuxième structure 220 de la cible 200. Egalement, le premier système de prise de vue 110 et le deuxième système de prise de vue 120 sont disposés en parallèle l'un par rapport à l'autre. De plus, le système optique comporte en outre un module optique 128 (par exemple avec un système optique catoptrique tel qu'un miroir) disposé entre le premier système de prise de vue 110 et le deuxième système de prise de vue 120 et configuré pour dévier une partie des rayons lumineux traversant au moins une partie de l'un parmi le premier et le deuxième système de prise de vue vers l'autre parmi le premier et le deuxième système de prise de vue. A l'inverse, le système optique 100 est agencé de sorte que le chemin optique depuis l'objet regardé (la cible 200 sur les figures 1 et 2) par le système optique 100 traverse au moins une portion de l'un parmi le premier système de prise de vue 110 et le deuxième système de prise de vue 120 (le premier système de prise de vue 110 sur les figures 1 et 2) avant d'atteindre l'autre parmi le premier système de prise de vue 110 et le deuxième système de prise de vue 120 (le deuxième système de prise de vue 120 sur les figures 1 et 2).

Dans un mode de réalisation, la distance focale du deuxième système de prise de vue 120 est plus grande que la distance focale du premier système de prise de vue 110. Par exemple, la différence entre la distance focale du deuxième système de prise de vue 120 et la distance focale du premier système de prise de vue 110 est comprise entre 0.5 et 5 millimètres.

Dans un mode de réalisation, le grandissement du premier système de prise de vue 110 est inférieur ou égal au grandissement du deuxième système de prise de vue 120. Par exemple, le grandissement du premier système de prise de vue 110 est compris entre 0.2 et 1 fois le grandissement du deuxième système de prise de vue 120. Par exemple, le grandissement du premier système de prise de vue 110 est compris entre 0.3 et 0.8, ou bien entre 0.4 et 0.6, de préférence autour de 0.5 fois le grandissement du deuxième système de prise de vue 120.

Dans le mode de réalisation des figures 1 et 2, le système optique 100 comporte en outre une source de lumière 140 orientée en direction de la cible tridimensionnelle 200, cette source de lumière 140 étant disposée afin de constituer une illumination latérale de la cible tridimensionnelle 200. A cet effet, cette source de lumière 140 est agencée de manière excentrée et inclinée par rapport au chemin optique 116+126 du système optique 100. En particulier, les rayons lumineux de la source de lumière 140 forment avec la face de référence 212 de la cible un angle tel que leur réflexion spéculaire sur les surfaces réfléchissantes de la cible, et en particulier sur les zones localisées 217, engendre des rayons lumineux réfléchis qui ne pénètrent pas dans le système optique 100. De même lorsque la face inclinée 222 comporte des éléments spéculaires 225, la réflexion des rayons lumineux de la source de lumière 140 sur ces éléments spéculaires 225 ne pénètrent pas dans le système optique 100.

Selon un mode de réalisation, le premier système de prise de vue 210 utilisé et le deuxième système de prise de vue 220 utilisé sont télécentriques. Pour rappel, la télécentricité est une caractéristique d'un système optique dans lequel tous les rayons principaux (le rayon central de chaque faisceau de rayons) qui passent à travers le système sont pratiquement collimatés et parallèles à l'axe optique. Dans le cas d'optiques télécentriques, la notion de profondeur de champ est remplacée par celle de distance de travail. Selon un autre mode de réalisation, le premier système de prise de vue 210 utilisé et le deuxième système de prise de vue 220 utilisé ne sont pas ou pas tous les deux télécentriques. Dans le cas où ils sont tous les deux télécentriques, on peut les utiliser également pour mesurer les caractéristiques géométriques des outils disposés sur le porte-outil 310.

On se reporte maintenant aux figures 2A et 6 pour exposer le procédé de mesure optique tridimensionnelle entre la cible 200 et le système optique 100, dans le cas d'une machine-outil dont le module d'usinage 300 comporte un tel dispositif optique 10. On prend comme directions de référence X, Y et Z celles de la machine-outil, en particulier du bâti de la machine-outil, ce qui donne une direction X verticale (ou premier axe transversal), une direction horizontale principale Z (ou axe principal) et une direction horizontale latérale Y (ou deuxième axe transversal). La cible 200 est placée sur le porte-outil 310 servant de premier objet (voir la figure 5) : le porte-outil 310 s'étend selon une direction principale horizontale, correspondant à l'axe X, avec possibilité de tourner autour de cet axe X. A cet effet, une partie du porte-outil 310, par exemple la pince , porte des logements sur sa périphérie, habituellement dédiés au montage de l'outil de serrage/desserrage de la pince, dans lesquels on peut mettre la cible 200, éventuellement associée à une puce RFID comme exposé précédemment. Par ailleurs, le système optique 100 est monté sur le support de pièce 320 servant de deuxième objet (voir la figure 6) et recevant la pièce à usiner 322. Le support de pièce 320 s'étend selon sa direction principale horizontale, correspondant à l'axe Z, avec possibilité de tourner autour de cet axe Z. Ensuite, le support de pièce 320 et le porte outil 310 sont placés dans une position proche, préalable à une étape d'usinage, plaçant l'outil 312 et la pièce à usiner à proximité l'un de l'autre, dans une position de mesure relative. Le positionnement de la cible 200 sur le porte-outil 310 et le positionnement du système optique 100 sur le support de pièce 320 permettent que dans cette position de mesure relative, on peut placer la cible 200, et plus précisément la face de référence 202 dans le prolongement de l'axe optique O du système optique 100 (à noter que cet axe optique O est parallèle à la direction Z). Ainsi, la face de référence 202 de la cible 200 est tournée en direction de la face d'entrée 102 du système optique 100.

Comme dans le cas représenté sur la figure 6, le dispositif optique 10 comporte en outre un troisième système de prise de vue 130 disposé sur le porte-outil 310 et configuré pour repérer l'orientation de la face utile 202 de la cible 200 et/ou l'orientation angulaire de la partie rotative du porte-outil 310, notamment autour de l'axe X. On effectue une étape supplémentaire, préliminaire, de positionnement de la cible 200, avant l'étape de prise de vue simultanée avec ledit système optique 100, selon laquelle :
- on dispose le porte-outil 310 et le support de pièce 320 de sorte que la face utile 202 de la cible tridimensionnelle 200 se trouve dans le chemin optique O du système optique 100. En particulier, on peut utiliser le troisième système de prise de vue 130 pour repérer l'orientation angulaire de la cible 200 par rapport à la partie rotative du porte-outil 310, donc par rapport à l'axe X, ce qui permet de modifier le cas échéant l'orientation angulaire de la partie rotative du porte-outil 310 (voir la flèche R sur la figure 6), et ainsi placer la cible 200 de sorte que sa face utile 202 soit tournée en direction du système optique 100. On obtient la position de mesure relative dans laquelle lorsque la cible 200 est orientée en direction du système optique 100 comme exposé précédemment dans le cas des figures 1 et 2A: dans ce cas, la direction Z s'étend entre la cible 200 et le système optique 100.

Lors de la première utilisation du dispositif optique 10, à savoir du système optique 100 et d'une cible 200 associée, respectivement monté sur un support de pièce 320 (ou plus généralement un deuxième objet) et sur un porte-outil 310 (ou plus généralement un premier objet), on doit réaliser une étape supplémentaire, préalable, de référencement spatial de la position de la cible 200 par rapport au porte-outil 310 (ou plus généralement un premier objet) qui porte la cible 200 dans les trois directions X, Y et Z. Il faut relever que l'on connait évidemment les paramètres du système optique 100, à savoir du premier système de prise de vue 110 et du deuxième système de prise de vue, y compris leur distance focale. A ce stade, on peut mentionner que lorsque l'espace de travail du module d'usinage 300 est confiné et maintenu à température constante, cette stabilité thermique engendre une stabilité dimensionnelle au dispositif optique 10 et donc de ses paramètres.

On rappelle que la mesure de la position relative tridimensionnelle entre la cible 200 et le système optique 100 est utilisée dans le cas d'une machine-outil pour *in fine* connaître la position relative tridimensionnelle en X, Y et Z entre le porte-outil 310 (ou plus généralement un premier objet) et le support de pièce 320 (ou plus généralement un deuxième objet).

Dans le présent texte, les trois directions X, Y et Z sont par exemple, les axes du module d'usinage 300 de la machine-outil. Ainsi, on peut définir Z comme étant l'axe principal, à savoir la direction horizontale principale séparant le premier objet (le porte-outil 310) du deuxième objet (du support de pièce 320). X peut être définie comme la direction verticale ou plus généralement un premier axe transversal et Y peut être défini comme une direction horizontale latérale ou plus généralement un deuxième axe transversal. Dans un mode de réalisation, le porte-outil 310 tourne autour d'un axe parallèle à cette direction X.

Lors de cette étape de référencement spatial de la position dans les trois directions X, Y et Z de la cible 200 (calibrage du dispositif optique 10), par exemple avec l'agencement des figures 2A et 2B, on active une prise de vue par le système optique 100, ce qui engendre d'une part la génération par le premier système d'acquisition d'images 112 du premier système de prise de vue 110 d'une première image de toute la face utile 202 de la cible 200 avec toute la face de référence 212 qui est nette et d'autre part la génération par le deuxième système d'acquisition d'images 122 du deuxième système de prise de vue 120 d'une deuxième image de toute la face inclinée 222 de la cible 200 avec seulement une zone nette sous forme de bande horizontale. Cette première image comporte l'image des zones localisées 217, ici délimitant un carré (voir la figure 3A), de sorte que le traitement de la première image engendre les diagonales C1 et C2 du carré et permet d'identifier le centre C3 du carré. Ainsi, comme la position de l'axe optique O sur la première image est connue, la détermination de la position du centre C3 du carré permet de connaître la position en X et en Y de la cible 200 par rapport à l'axe optique O, mais aussi d'une part par rapport à un repère 314 en direction X sur le porte outil 310 et d'autre part par rapport à un repère 316 en direction Y sur le porte-outil 310. En effet, comme on le voit sur les figures 2A et 2B, on utilise à titre de référence en X une face du porte outil 310 qui est orthogonale à l'axe X, par exemple résultant d'un épaulement rentrant le long d'un tronçon du porte outil 310, visible comme une ligne sur la première image et forme ledit repère 314 en direction X. De plus, comme on le voit sur les figures 2A et 2B, on utilise à titre de référence en Y une dimension du porte outil 310 à proximité de la cible 200, qui est orthogonale à l'axe X, et dans le cas représenté qui est la largeur (parallèle à la direction Y) du porte outil 310 à proximité de la cible 200, par exemple le diamètre lorsque cette portion du porte-outil 310 est cylindrique de section circulaire ; cette dimension forme ledit repère 316 en direction Y.

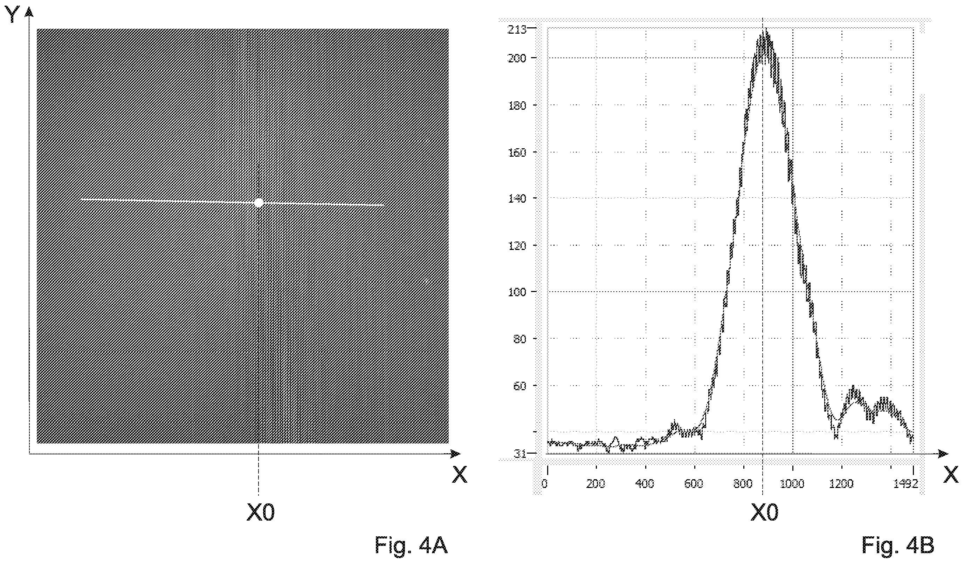

En parallèle, on effectue le traitement de la deuxième image dont un exemple est visible sur la figure 4A. Par l'analyse du contraste local de cette deuxième image (voir la figure 4B représentant des courbes de contraste en fonction de la position en X), on détermine la position X0 dans la direction verticale X de la zone nette de la deuxième image. Cette analyse se fait via un algorithme permettant de déterminer les pixels les plus nets de l'image. Comme l'inclinaison de la face inclinée 222 est connue, on dispose d'une courbe de correspondance entre X et Z de cette face inclinée 222, propre à la cible 200. Grâce à cette courbe de correspondance, la connaissance de la position X0 (voir figure 4A et 4B) permet d'en déduire la position Z0 de la face inclinée 222 sur l'axe optique O, et donc la position en Z de la cible 200 par rapport au système optique 100. Par ailleurs, la position relative en Z du système optique 100 par rapport au support de pièce 320 est connue par une règle de mesure (non représentée) disposée selon l'axe Z sur le support de pièce 320 et qui supporte le système optique 100. De même, la position relative en Z de la cible 200 par rapport au repère 314 du porte-outil 310 est connue.

En effectuant cette opération de multiples fois en modifiant à chaque fois la distance en Z du support de pièce 320 par rapport au porte-outil 310 ( par exemple en reculant ou en avançant le support de pièce 320), on peut ainsi reconstituer l'image tridimensionnelle de la face inclinée 222 de la cible 200, et disposer d'une base de référence formant une cartographie pour les coordonnées tridimensionnelles de la face inclinée 222 de la cible 200 par rapport au porte-outil 310. Au final, c'est toute la face utile 202 de la cible 200 (face de référence 212 et face inclinée 222) qui est référencée spatialement dans les trois directions X, Y et Z par rapport au porte-outil 310.

Ensuite, on peut réaliser la mesure proprement dite à chaque fois que nécessaire au cours des opérations d'utilisation du module d'usinage 300 équipé de cette cible 200 et de ce système optique 100, non démontés entretemps pour conserver la précision de la mesure du référencement spatial exposé précédemment. A cet effet, on se trouve par exemple avec l'agencement de la figure 2A. On effectue, si nécessaire, une rotation du porte-outil 310 autour de son axe de rotation qui est parallèle à l'axe X (voir la flèche R sur la figure 6), pour aligner la cible 200 avec le système optique 100. Puis, on active une prise de vue par le système optique 100, ce qui engendre d'une part la génération par le premier système d'acquisition d'images 112 du premier système de prise de vue 110 d'une première image de toute la face utile 202 de la cible 200 avec toute la face de référence 212 qui est nette et d'autre part la génération par le deuxième système d'acquisition d'images 122 du deuxième système de prise de vue 120 d'une deuxième image de toute la face inclinée 222 de la cible 200 avec seulement une zone nette sous forme de bande horizontale correspondant à la distance focale du deuxième système de prise de vue 120. L'analyse de cette première image permet, comme exposé précédemment, d'identifier le centre C3 du carré formé par les éléments localisés 217, et ainsi la position en X et en Y de la cible 200 par rapport à l'axe optique O, et aussi par rapport au porte outil 310. L'analyse de la deuxième image et en particulier de la position de la zone nette de la deuxième image (comme sur la Figure 2A) selon la direction X permet de connaître la position en Z, donc la distance, de la cible 200 par rapport au système optique 100. En effet, pour la deuxième image, comme on connait la position Z de chaque pixel de l'image de la face inclinée 222 par rapport aux références 314 et 316 sur le porte-outil 310, il est possible de mesurer très rapidement la position Z de la cible 200 et donc du porte-outil 310.

On comprend de ce qui précède que de cette façon, on mesure très rapidement, uniquement par l'analyse des deux images engendrées par le système optique 100, et sans perte de temps que nécessiterait un réglage ou une mise au point du ce système optique 100, la position en X, Y et Z de la cible 200 par rapport au système optique 100 et partant du porte-outil 310 par rapport au support de pièce 320. Ceci est possible car on connaît la position en X, Y et Z du système optique 100 par rapport au support de pièce 320.

Le présent texte concerne également un système optique pour la mesure tridimensionnelle de la position relative entre un premier objet et un deuxième objet sur lequel ledit système optique est destiné à être monté, ledit système optique comprenant un premier système de prise de vue et un deuxième système de prise de vue, dans lequel :
- la profondeur de champ du premier système de prise de vue est au moins 10 fois supérieure à la profondeur de champ du deuxième système de prise de vue,
   et
- le système optique est agencé de sorte que le chemin optique du premier système de prise de vue et le chemin optique du deuxième système de prise de vue présentent un tronçon commun comportant le plan focal image du premier système de prise de vue et le plan focal image du deuxième système de prise de vue.

Le présent texte concerne également un procédé de mesure optique tridimensionnelle selon trois directions orthogonales X, Y et Z, entre un premier objet et un deuxième objet alignés distants l'un de l'autre dans la direction principale Z, dans lequel :
- on fournit une cible tridimensionnelle comprenant sur une face utile formant une référence de positionnement :
   * une première structure définissant une face de référence plane répartie entre au moins :
      - une première portion dont la surface est réfléchissante selon des premiers paramètres de réflexion, et
      - une deuxième portion dont la surface est réfléchissante selon des seconds paramètres de réflexion différents des premiers paramètres de réflexion, et
   * une deuxième structure présentant une face inclinée par rapport à ladite face plane de référence
- on fournit un système optique
   comprenant un premier système de prise de vue et un deuxième système de prise de vue , dans lequel :
   - la profondeur de champ du premier système de prise de vue est au moins 10 fois supérieure à la profondeur de champ du deuxième système de prise de vue, et
   - ledit système optique est agencé d'une part de sorte que le chemin optique du premier système de prise de vue et le chemin optique du deuxième système de prise de vue présentent un tronçon commun comportant le plan focal image du premier système de prise de vue et le plan focal image du deuxième système de prise de vue,
      et d'autre part de sorte que la différence entre la distance focale du deuxième système de prise de vue et la distance focale du premier système de prise de vue, est comprise entre la distance minimale et la distance maximale séparant la face de référence de la face inclinée,
   - on positionne ladite cible tridimensionnelle sur le premier objet de sorte que d'une part la distance focale du premier système de prise de vue est apte à placer le foyer image du premier système de prise de vue sur la première structure de la cible et que d'autre part la distance focale du deuxième système de prise de vue est apte à placer le foyer image du deuxième système de prise de vue sur la deuxième structure de la cible,
   - on positionne ledit système optique sur le deuxième objet,
   - on effectue au moins une prise de vue simultanément avec le premier système de prise de vue du système optique et avec le deuxième système de prise de vue du système optique, ce par quoi, pour chaque prise de vue par le système optique, d'une part le premier système de prise de vue génère une première image de la cible permettant d'identifier sur la face de référence la position de la deuxième portion par rapport à la première portion, ce qui donne en premier lieu une première information sur la position relative selon la direction X de la cible par rapport au premier système de prise de vue et en second lieu une deuxième information sur la position relative entre la cible et le premier système de prise de vue selon la direction Y, et d'autre part le deuxième système de prise de vue génère une deuxième image de la cible comprenant une portion nette correspondant à un emplacement de la face inclinée de la deuxième structure, ce qui donne une troisième information sur la distance entre ladite cible et ledit deuxième système de prise de vue selon la direction Z.

Comme déjà exposé précédemment, le système optique génère donc la première image et la deuxième image de manière synchronisée. De plus, le système optique 100 génère la première image et la deuxième image sans réaliser de mise au point, ce qui permet d'effectuer la prise de vue de manière immédiate et sans perte de temps.

Le présent texte concerne également une machine-outil comportant une cible optique telle que définie précédemment, ainsi qu'une machine-outil comportant un système optique tel que défini précédemment. Le présente texte concerne également une machine-outil comprenant un module d'usinage équipé d'un porte-outil et d'un support de pièce, et un dispositif optique de mesure pour la mesure tridimensionnelle de la position relative entre ledit porte-outil et ledit support de pièce, ledit dispositif optique de mesure comprenant un système optique monté sur le support de pièce et une cible montée sur le porte-outil et comprenant une face utile formant une référence de positionnement apte à se placer dans l'axe optique du système optique. Par exemple, le dispositif optique de mesure est configuré pour permettre par une unique étape de prise de vue de la cible par le système optique de déterminer la position relative tridimensionnelle entre le support de la pièce à usiner et le porte-outil. Egalement, selon une disposition possible, la cible est disposée de sorte que le plan focal image du système optique puisse être confondu avec la face utile de la cible.

Le présent texte concerne en outre un arrangement pour la mesure optique tridimensionnelle de la position relative entre un premier objet et un deuxième objet, comprenant :
- une installation comprenant un premier objet et un deuxième objet,
- un dispositif optique de mesure tel que décrit dans le présent texte dans lequel ;
- le premier système de prise de vue est configuré de sorte que son plan focal image est apte à correspondre à la face de référence de la première structure, et
- le deuxième système de prise de vue est configuré de sorte que son plan focal image est apte à être sécant avec la face inclinée de la cible tridimensionnelle. Selon une deuxième possibilité, compatible avec la première possibilité précitée ou prise seule, le dispositif optique de mesure est tel que :
   - la distance focale du premier système de prise de vue est apte à permettre de placer le foyer image sur la première structure,
   - la distance focale du deuxième système de prise de vue est apte à permettre de placer le foyer image sur la deuxième structure.

Une telle installation est par exemple un équipement, une machine, un module notamment scientifique ou technique présentant un premier objet et un deuxième objet déplaçables l'un par rapport à l'autre et pour lesquels il est nécessaire d'effectuer un référencement de position relative dans l'espace tridimensionnel. Par exemple, cette installation est une machine-outil ou un module d'usinage avec comme premier objet le porte-outil ou un des portes-outils et comme deuxième objet le support de pièce portant la pièce à usiner (barre, ébauche, ....). Selon un autre exemple, cette installation est une unité de montage de composants électroniques sur un PCB (ou Printed Circuit Board pour circuit imprimé), avec comme premier objet le support du circuit imprimé et comme deuxième objet la pince ou autre outil de montage d'un composant électronique. Selon encore un autre exemple, cette installation est un module de culture cellulaire pour réaliser l'ensemencement de séries de puits logées sur des microplaques, le premier objet étant le support de la microplaque et le deuxième objet étant le support du dispositif d'injection des cellules à cultiver. Le présent texte se rapporte aussi à un procédé de mesure optique tridimensionnelle selon trois directions orthogonales X, Y et Z, entre un premier objet et un deuxième objet alignés et distants l'un de l'autre dans la direction principale Z, dans lequel :
- on fournit une cible tridimensionnelle comprenant sur une face utile formant une référence de positionnement, et comportant :
   * une première structure définissant une face de référence plane répartie entre au moins :
      - une première portion dont la surface est réfléchissante selon des premiers paramètres de réflexion, et
      - une deuxième portion dont la surface est réfléchissante selon des seconds paramètres de réflexion différents des premiers paramètres de réflexion, et
   * une deuxième structure présentant une face inclinée par rapport à ladite face plane de référence
- on fournit un système optique
   comprenant un premier système de prise de vue et un deuxième système de prise de vue , dans lequel :,
- on positionne ladite cible tridimensionnelle sur le premier objet de sorte que d'une part la distance focale du premier système de prise de vue est apte à placer le foyer image du premier système de prise de vue sur la première structure de la cible et que d'autre part la distance focale du deuxième système de prise de vue est apte à placer le foyer image du deuxième système de prise de vue sur la deuxième structure de la cible,
- on positionne ledit système optique sur le deuxième objet,
- on effectue au moins une prise de vue simultanément avec le premier système de prise de vue du système optique et avec le deuxième système de prise de vue du système optique, ce par quoi, pour chaque prise de vue par le système optique, d'une part le premier système de prise de vue génère une première image de la cible permettant d'identifier sur la face de référence la position de la deuxième portion par rapport à la première portion (notamment la position des zones localisées sur la face de référence), ce qui donne en premier lieu une première information sur la position relative selon la direction X de la cible par rapport au premier système de prise de vue et en second lieu une deuxième information sur la position relative entre la cible et le premier système de prise de vue selon la direction Y, et d'autre part le deuxième système de prise de vue génère une deuxième image de la cible comprenant une portion nette correspondant à un emplacement de la face inclinée de la deuxième structure, ce qui donne une troisième information sur la distance entre ladite cible et ledit deuxième système de prise de vue selon la direction Z.
A cet effet, selon une possibilité, la profondeur de champ (DOF1) du premier système de prise de vue est au moins 10 fois supérieure à la profondeur de champ (DOF2) du deuxième système de prise de vue. Par ailleurs, selon une autre possibilité, prise seule ou en combinaison avec la précédente, ledit système optique est agencé de sorte que le chemin optique du premier système de prise de vue et le chemin optique du deuxième système de prise de vue présentent un tronçon commun comportant le plan focal image du premier système de prise de vue et le plan focal image du deuxième système de prise de vue. Par ailleurs, selon une autre possibilité, prise seule ou en combinaison avec la possibilité précédente ou les deux possibilités précédentes, la différence entre la distance focale du deuxième système de prise de vue et la distance focale du premier système de prise de vue, est comprise entre la distance minimale et la distance maximale séparant la face de référence de la face inclinée.

Par cette méthode, on peut disposer des informations géométriques spatiales liées à la (première) face de référence et à la face inclinée ou deuxième face de référence de la cible tridimensionnelle, permettant d'en déduire la position relative dans les trois directions spatiales X, Y et Z entre le premier objet et le deuxième objet. Au préalable, on aura effectué le référencement de la position relative tridimensionnelle entre la cible et le premier objet et le référencement de la position relative tridimensionnelle entre le système optique et le deuxième objet.

Il faut relever que dans un mode de réalisation, la prise de vue ou génération d'image par chaque système de prise de vue du système optique s'effectue sans effectuer de mise au point du système de prise de vue correspondant. En effet, c'est la position relative dans les trois directions X, Y et Z du système de prise de vue par rapport à l'objet qu'il regarde ( et donc à la fois la position relative du premier système de prise de vue par rapport à la face de référence de la cible et la position relative du deuxième système de prise de vue par rapport à la face inclinée de la cible) ainsi que les propriétés optiques, et par exemple la profondeur de champ très différente de chaque système de prise de vue du système optique, qui permet de générer simultanément deux images, respectivement de la face de référence de de la face inclinée. L'analyse de ces deux images (voir de deux séries d'images) permet d'en déduire des informations sur la position relative en X (cette direction X correspondant par exemple à la hauteur) et en Y (cette direction Y correspondant par exemple au décalage latéral horizontal) et en Z (cette direction Z correspondant par exemple à la distance horizontale, principale) entre la cible et le système optique, et partant la position relative tridimensionnelle entre le premier objet qui porte la cible tridimensionnelle et le deuxième objet qui porte le système optique.

Dans un mode de réalisation, on effectue, après le positionnement de la cible tridimensionnelle sur le premier objet et le positionnement du système optique sur le deuxième objet, une étape supplémentaire de référencement spatial de la position en X, Y et Z de la cible par rapport au premier objet par le système optique.

Selon une disposition possible, la deuxième portion de la face de référence plane est répartie selon une série de zones localisées positionnées dans la première portion et la première image générée par le premier système de prise de vue permet d'identifier la position des zones localisées de la deuxième portion sur la face de référence, ce qui donne une information sur la position relative entre lesdites zones localisées et le premier système de prise de vue permettant de déduire la mesure relative selon la direction Y et selon la direction X.

### Numéros de référence employés sur les figures

- X: Direction verticale (premier axe transversal)
- Y: Direction horizontale latérale (deuxième axe transversal)
- Z: Direction horizontale principale séparant premier objet du deuxième objet (Axe principal)
- C1: Diagonale
- C2: Diagonale
- C3: Centre
- α: Angle de la face inclinée
- R: Flèche pour la rotation du porte-outil et de la cible
- 10: Dispositif optique
- 200: Cible tridimensionnelle
- 202: Face utile
- 210: Première structure
- 212: Face de référence
- 214: Première portion (surface réfléchissante selon une réflexion diffuse)
- 216: Deuxième portion (surface réfléchissante selon une réflexion spéculaire)
- 217: Zones localisées
- 218: Ouverture
- 219: Logement
- 220: Deuxième structure
- 222: Face inclinée
- 224: Éléments en relief
- 225: Éléments spéculaires
- 230: Plaque de protection transparente
- 231: paroi de fond
- 232: Platine
- 233: Couche réfléchissante
- 234: Paroi cylindrique
- 100: Système optique
- O: Axe optique
- 102: Face d'entrée du système optique
- 110: Premier système de prise de vue
- DOF1: Profondeur de champ du premier système de prise de vue
- F1: Plan focal image du premier système de prise de vue
- 112: Premier système d'acquisition d'images
- 116: Chemin optique du premier système de prise de vue
- 120: Deuxième système de prise de vue
- F2: Plan focal image du deuxième système de prise de vue
- DOF2: Profondeur de champ du deuxième système de prise de vue
- 122: Deuxième système d'acquisition d'images
- 126: Chemin optique du deuxième système de prise de vue
- 128: Module optique avec système optique catoptrique
- 129: Miroir
- 130: Troisième système de prise de vue
- 140: Source de lumière (Illumination latérale)
- 300: Module d'usinage
- 310: Porte-outil (premier objet)
- 312: Outil
- 314: Repère en X sur le porte-outil
- 316: Repère en Y sur le porte-outil
- 320: Support de pièce ou broche matière (deuxième objet)
- 322: Pièce à usiner (matière)

## Revendications

1. Machine-outil comprenant un module d'usinage (300) équipé d'un porte-outil (310) et d'un support de pièce (320), et un dispositif optique (10) de mesure pour la mesure tridimensionnelle de la position relative entre ledit porte-outil (310) et ledit support de pièce (320), ledit dispositif optique (10) de mesure comprenant :
- un système optique (100) avec un système d'acquisition d'images, monté sur le support de pièce (320) et
- une cible (200) tridimensionnelle montée sur le porte-outil (310) et comprenant une face utile (202) formant une référence de positionnement apte à se placer dans l'axe optique (O) du système optique (100), ladite face utile (202) portant :
* une première structure (210) définissant une face de référence (212) plane répartie entre au moins :
- une première portion (214) dont la surface est réfléchissante selon des premiers paramètres de réflexion, et
- une deuxième portion (216) dont la surface est réfléchissante selon des seconds paramètres de réflexion différents des premiers paramètres de réflexion, et
* une deuxième structure (220) présentant une face inclinée (222) par rapport à ladite face plane de référence (212),
et dans laquelle ledit système optique (100) comprend un premier système de prise de vue (110) et un deuxième système de prise de vue (120), dans lequel la différence entre la distance focale du deuxième système de prise de vue (120) et la distance focale du premier système de prise de vue (110), est comprise entre la distance minimale et la distance maximale séparant la face de référence (212) de la face inclinée (222),
dans laquelle ledit dispositif optique (10) de mesure est configuré pour permettre par une unique étape de prise de vue de la cible (200) par le système optique (100) de déterminer la position relative tridimensionnelle entre le support (320) de la pièce à usiner et le porte-outil (310).

2. Machine-outil selon la revendication 1, dans laquelle la surface de ladite première portion (214) est réfléchissante selon une réflexion diffuse, et la surface de ladite deuxième portion (216) est réfléchissante selon une réflexion spéculaire,

3. Machine-outil selon l'une quelconque des revendications 1 et 2, dans laquelle ladite deuxième portion (216) est répartie selon une série de zones localisées (217) positionnées dans la première portion (214).

4. Machine-outil selon l'une quelconque des revendications 1 à 3, dans laquelle la surface de ladite face inclinée (222) présente des éléments de relief (224) ou bien des éléments spéculaires (225) régulièrement répartis.

5. Machine-outil selon la revendication 3, dans laquelle lesdites zones localisées (217) définissent entre elles une figure géométrique appartenant à la liste suivante : quadrilatère, parallélogramme, rectangle, carré, losange, polygone régulier et cercle.

6. Machine-outil selon la revendication 3, dans laquelle lesdites zones localisées (217) de ladite deuxième portion (216) sont formée d'îlots ou de segments répartis dans la première portion (214)

7. Machine-outil selon l'une quelconque des revendications 1 à 6, dans laquelle la première structure (210) et la deuxième structure (220) sont disposées sur la face utile (202) de manière concentrique l'une par rapport à l'autre.

8. Machine-outil selon l'une quelconque des revendications 1 à 7, dans laquelle la première structure (210) entoure la deuxième structure (220).

9. Machine-outil selon la revendication 3, dans laquelle lesdites zones localisées (217) de la deuxième portion (216) de la première structure (210) définissent un carré qui entoure la deuxième structure (220).

10. Machine-outil selon l'une quelconque des revendications 1 à 9, dans laquelle la première structure (210) délimite une ouverture (218) pour un logement (219) logeant ladite deuxième structure (220) et dans laquelle la deuxième structure (220) est disposée dans ledit logement (219) avec la face inclinée (222) qui est en retrait par rapport à la face de référence (212) de ladite première structure (210).

11. Machine-outil selon l'une quelconque des revendications 1 à 10, dans laquelle la surface de la face inclinée (222) de la deuxième structure (220) est striée, en particulier la surface de la face inclinée (222) de la deuxième structure (220) est recouverte par l'un des éléments suivants : réseau gravé, grille structurée ou réseau de lignes spéculaires (225).

12. Machine-outil selon l'une des revendications 1 à 11, dans laquelle ledit dispositif optique (10) de mesure comprend en outre une source de lumière orientée en direction de la cible (200) tridimensionnelle, ladite source de lumière étant disposée afin de constituer une illumination latérale de la cible (200) tridimensionnelle.

13. Machine-outil selon l'une des revendications 1 à 12, dans laquelle le système optique (100) comprend un premier système de prise de vue (110) et un deuxième système de prise de vue (120) , dans lequel :
- la profondeur de champ du premier système de prise de vue (110) est au moins 10 fois supérieure à la profondeur de champ du deuxième système de prise de vue (120), et
- le système optique (100) est agencé de sorte que le chemin optique du premier système de prise de vue (110) et le chemin optique du deuxième système de prise de vue (120) présentent un tronçon commun placé sur l'axe optique (O) du système optique (100) et comportant le plan focal image du premier système de prise de vue (110) et le plan focal image du deuxième système de prise de vue (120).

14. Machine-outil selon la revendication précédente, dans laquelle le système optique (100) est agencé de sorte que le chemin optique depuis l'objet traverse au moins une portion de l'un parmi le premier et le deuxième système de prise de vue (120) avant d'atteindre l'autre parmi le premier et le deuxième système de prise de vue (120).

15. Machine-outil selon la revendication 13 ou 14, dans laquelle le premier et le deuxième système de prise de vue (120) sont disposés en parallèle l'un par rapport à l'autre et en ce que le système optique (100) comporte en outre un module optique (128) disposé entre le premier et le deuxième système de prise de vue (120) et configuré pour dévier une partie des rayons lumineux traversant au moins une partie de l'un parmi le premier et le deuxième système de prise de vue (120) vers l'autre parmi le premier et le deuxième système de prise de vue (120).

16. Machine-outil selon l'une quelconque des revendications 13 à 15, dans laquelle la distance focale du deuxième système de prise de vue (120) est plus grande que la distance focale du premier système de prise de vue (110).

17. Machine-outil selon l'une quelconque des revendications 13 à 16, dans laquelle le grandissement du premier système de prise de vue (110) est inférieur au grandissement du deuxième système de prise de vue (120).

18. Machine-outil selon l'une quelconque des revendications 13 à 17, dans lequel la profondeur de champ (DOF1) du premier système de prise de vue (110) est supérieure ou égale à 0.8 millimètre.

19. Machine-outil selon l'une quelconque des revendications 13 à 18, dans laquelle la profondeur de champ (DOF2) du deuxième système de prise de vue (120) est inférieure ou égale à 0.1 millimètre.

20. Machine-outil selon l'une quelconque des revendications 1 à 19, dans laquelle ;
- le premier système de prise de vue (110) est configuré de sorte que son plan focal image est apte à correspondre à la face de référence (212) de la première structure (210), et
- le deuxième système de prise de vue (120) est configuré de sorte que son plan focal image est apte à être sécant avec la face inclinée (222) de la cible (200) tridimensionnelle.

21. Machine-outil selon l'une des revendications 13 à 20, dans laquelle, le dispositif optique (10) comporte en outre un troisième système de prise de vue (130) disposé sur le porte-outil (310) et configuré pour repérer l'orientation de la face utile (202) de la cible (200) et/ou l'orientation angulaire du porte-outil (310).

22. Procédé de mesure optique tridimensionnelle selon trois directions orthogonales X, Y et Z dans l'espace tridimensionnel d'une machine-outil, entre un porte-outil (310) et un support de pièce (320) alignés et distants l'un de l'autre dans la direction principale Z, dans lequel :
- on fournit un système optique (100) avec un système d'acquisition d'images, ledit système optique (100) comprenant un premier système de prise de vue (110) et un deuxième système de prise de vue (120), ledit système optique (100) est agencé de sorte que la différence entre la distance focale du deuxième système de prise de vue (120) et la distance focale du premier système de prise de vue (110), est comprise entre la distance minimale et la distance maximale séparant la face de référence (212) de la face inclinée (222),
- on monte ledit système optique (100) sur le support de pièce (320),
- on fournit une cible (200) tridimensionnelle comprenant une face utile (202) formant une référence de positionnement, ladite face utile (202) comprenant :
* une première structure (210) définissant une face de référence (212) plane répartie entre au moins :
- une première portion (214) dont la surface est réfléchissante selon des premiers paramètres de réflexion, et
- une deuxième portion (216) dont la surface est réfléchissante selon des seconds paramètres de réflexion différents des premiers paramètres de réflexion, et
* une deuxième structure (220) présentant une face inclinée (222) par rapport à ladite face plane de référence,
- on monte ladite cible (200) sur le porte-outil (310) ,
- on positionne le porte-outil (310) et le support de pièce (320) de sorte que la cible (200) est apte à se placer dans l'axe optique (O) du système optique (100) et de sorte que d'une part la distance focale du premier système de prise de vue (110) est apte à placer le foyer image du premier système de prise de vue (110) sur la première structure (210) de la cible (200) et que d'autre part la distance focale du deuxième système de prise de vue (120) est apte à placer le foyer image du deuxième système de prise de vue (120) sur la deuxième structure (220) de la cible (200),
- on réalise une unique étape de prise de vue de la cible (200) avec le système optique (100) disposé de façon à coopérer avec la cible (200) ce par quoi on détermine la position relative tridimensionnelle entre le support (320) de la pièce à usiner et le porte-outil (310), et dans lequel lors de ladite étape de prise de vue avec le système optique (100), on effectue au moins une prise de vue simultanément avec le premier système de prise de vue (110) du système optique (100) et avec le deuxième système de prise de vue (120) du système optique (100), ce par quoi, pour chaque prise de vue par le système optique (100), d'une part le premier système de prise de vue (110) génère une première image de la cible (200) permettant d'identifier sur la face de référence (212) la position de la deuxième portion (216) par rapport à la première portion (214), ce qui donne en premier lieu une première information sur la position relative selon la direction X de la cible (200) par rapport au premier système de prise de vue (110) et en second lieu une deuxième information sur la position relative entre la cible (200) et le premier système de prise de vue (110) selon la direction Y, et d'autre part le deuxième système de prise de vue (120) génère une deuxième image de la cible (200) comprenant une portion nette correspondant à un emplacement de la face inclinée (222) de la deuxième structure, ce qui donne une troisième information sur la distance entre ladite cible (200) et ledit deuxième système de prise de vue (120) selon la direction Z.

23. Procédé de mesure selon la revendication 22, dans lequel :
- ladite surface de la première portion (214) est réfléchissante selon une réflexion diffuse, et ladite surface de la deuxième portion (216) est réfléchissante selon une réflexion spéculaire,
- dans ledit système optique (100), la profondeur de champ du premier système de prise de vue (110) est au moins 10 fois supérieure à la profondeur de champ du deuxième système de prise de vue (120), et
- ledit système optique (100) est agencé de sorte que le chemin optique du premier système de prise de vue (110) et le chemin optique du deuxième système de prise de vue (120) présentent un tronçon commun comportant le plan focal image du premier système de prise de vue (110) et le plan focal image du deuxième système de prise de vue (120).

24. Procédé de mesure selon l'une des revendications 22 ou 23, dans lequel ladite deuxième portion (216) de la face de référence (212) plane est répartie selon une série de zones localisées (217) positionnées dans la première portion (214) et dans lequel lorsque ledit premier système de prise de vue (110) génère une première image de la cible (200), la position des zones localisées (217) de la deuxième portion (216) est identifiée sur la face de référence (212), ce qui donne une information sur la position relative entre lesdites zones localisées (217) et le premier système de prise de vue (110) permettant de déduire la mesure relative selon la direction Y et selon la direction X.

## Patentansprüche

1. Werkzeugmaschine mit einem Bearbeitungsmodul (300), das mit einem Werkzeughalter (310) und einem Werkstückträger (320) versehen ist, und einer optischen Messvorrichtung (10) für die dreidimensionale Messung der relativen Position zwischen dem Werkzeughalter (310) und dem Werkstückträger (320), wobei die optische Messvorrichtung (10) umfasst:
- ein optisches System (100) mit einem Bilderfassungssystem, das an der Werkstückträger (320) angebracht ist, und
- eine dreidimensionale Zielvorrichtung (200), die auf dem Werkzeughalter (310) montiert ist und eine Nutzfläche (202) umfasst, die eine Positionierungsreferenz bildet, die geeignet ist, sich in der optischen Achse (O) des optischen Systems (100) zu positionieren, wobei die Nutzfläche (202) trägt:
* eine erste Struktur (210), die eine ebene Bezugsfläche (212) definiert, die verteilt ist zwischen mindestens :
- einem ersten Abschnitt (214), dessen Oberfläche gemäß ersten Reflexionsparametern reflektierend ist, und
- einem zweiten Abschnitt (216), dessen Oberfläche gemäß zweiten Reflexionsparametern, die sich von den ersten Reflexionsparametern unterscheiden, reflektierend ist, und
* eine zweite Struktur (220) mit einer schrägen Fläche (222) in Bezug auf die ebene Bezugsfläche (212), und wobei das optische System (100) ein erstes Bildaufnahmesystem (110) und ein zweites Bildaufnahmesystem (120) umfasst, wobei die Differenz zwischen der Brennweite des zweiten Bildaufnahmesystems (120) und der Brennweite des ersten Bildaufnahmesystems (110) zwischen dem minimalen Abstand und dem maximalen Abstand liegt, der die Bezugsfläche (212) von der schrägen Fläche (222) trennt, wobei die optische Messvorrichtung (10) so konfiguriert ist, dass sie durch einen einzigen Schritt der Aufnahme der Zielvorrichtung (200) durch das optische System (100) ermöglicht, die dreidimensionale relative Position zwischen dem Werkstückträger (320) des Werkstücks und dem Werkzeughalter (310) zu bestimmen.

2. Werkzeugmaschine nach Anspruch 1, wobei die Oberfläche des ersten Abschnitts (214) diffus reflektierend und die Oberfläche des zweiten Abschnitts (216) spiegelnd reflektierend ist.

3. Werkzeugmaschine nach einem der Ansprüche 1 oder 2, wobei der zweite Abschnitt (216) in eine Mehrzahl von ortsbegrenzten Bereichen (217) aufgeteilt ist, die in dem ersten Abschnitt (214) angeordnet sind.

4. Werkzeugmaschine nach einem der Ansprüche 1 bis 3, bei der die Oberfläche der schrägen Fläche (222) regelmäßig verteilte reliefartige Elemente (224) oder auch spiegelnde Elemente (225) aufweist.

5. Werkzeugmaschine nach Anspruch 3, bei der die ortsbegrenzten Bereiche (217) zwischen einander eine geometrische Form definieren, die zu der folgenden Gruppe gehört: Viereck, Parallelogramm, Rechteck, Quadrat, Raute, regelmäßiges Polygon und Kreis.

6. Werkzeugmaschine nach Anspruch 3, wobei die ortsbegrente Bereiche (217) des zweiten Abschnitts (216) aus Erhebungen oder Segmenten gebildet werden, die über den ersten Abschnitt (214) verteilt sind.

7. Werkzeugmaschine nach einem der Ansprüche 1 bis 6, wobei die erste Struktur (210) und die zweite Struktur (220) auf der Nutzfläche (202) konzentrisch zueinander angeordnet sind.

8. Werkzeugmaschine nach einem der Ansprüche 1 bis 7, wobei die erste Struktur (210) die zweite Struktur (220) umschließt.

9. Werkzeugmaschine nach Anspruch 3, wobei die ortsbegrenzten Bereiche (217) des zweiten Abschnitts (216) der ersten Struktur (210) ein Quadrat definieren, das die zweite Struktur (220) umschließt.

10. Werkzeugmaschine nach einem der Ansprüche 1 bis 9, wobei die erste Struktur (210) eine Öffnung (218) für ein Gehäuse (219) bildet, das die zweite Struktur (220) aufnimmt, und wobei die zweite Struktur (220) in dem Gehäuse (219) mit der schrägen Fläche (222) angeordnet ist, die in Bezug auf die Bezugsfläche (212) der ersten Struktur (210) versetzt ist.

11. Werkzeugmaschine nach einem der Ansprüche 1 bis 10, wobei die Oberfläche der schrägen Seite (222) der zweiten Struktur (220) geriffelt ist, insbesondere die Oberfläche der schrägen Fläche (222) der zweiten Struktur (220) mit einem der folgenden Elemente überzogen ist: geätztes Gitter, strukturiertes Gitter oder spiegelndes Liniengitter (225).

12. Werkzeugmaschine nach einem der Ansprüche 1 bis 11, wobei die optische Messvorrichtung (10) weiter eine Lichtquelle umfasst, die in Richtung der dreidimensionalen Zielvorrichtung (200) gerichtet ist, wobei die Lichtquelle so angeordnet ist, dass sie eine seitliche Beleuchtung der dreidimensionalen Zielvorrichtung (200) ausbildet.

13. Werkzeugmaschine nach einem der Ansprüche 1 bis 12, wobei das optische System (100) ein erstes Bildaufnahmesystem (110) und ein zweites Bildaufnahmesystem (120) umfasst, wobei :
- die Schärfentiefe des ersten Bildaufnahmesystems (110) mindestens 10-mal höher ist als die Schärfentiefe des zweiten Bildaufnahmesystems (120), und
- das optische System (100) so angeordnet ist, dass der optische Pfad des ersten Bildaufnahmesystems (110) und der optische Pfad des zweiten Bildaufnahmesystems (120) einen gemeinsamen Abschnitt umfassen, der auf der optischen Achse (O) des optischen Systems (100) angeordnet ist und die Bildbrennebene des ersten Bildaufnahmesystems (110) und die Bildbrennebene des zweiten Bildaufnahmesystems (120) einschließt .

14. Werkzeugmaschine nach dem vorhergehenden Anspruch, wobei das optische System (100) derart angeordnet ist, dass der optische Pfad von dem Objekt zumindest einen Teil des ersten oder zweiten Bildaufnahmesystems (120) durchläuft, bevor er das jeweils andere des ersten oder zweiten Bildaufnahmesystems (120) passiert.

15. Werkzeugmaschine nach Anspruch 13 oder 14, wobei das erste und das zweite Bildaufnahmesystem (120) parallel zueinander angeordnet sind und das optische System (100) ferner ein optisches Modul (128) umfasst, das zwischen dem ersten und dem zweiten Bildaufnahmesystem (120) angeordnet und so ausgebildet ist, dass es einen Teil der Lichtstrahlen, die zumindest teilweise durch eines von dem ersten und dem zweiten Bildaufnahmesystem (120) dringen, auf das andere von dem ersten und dem zweiten Bildaufnahmesystem (120) ablenkt.

16. Werkzeugmaschine nach einem der Ansprüche 13 bis 15, wobei die Brennweite des zweiten Bildaufnahmesystems (120) im Vergleich zur Brennweite des ersten Bildaufnahmesystems (110) größer ist.

17. Werkzeugmaschine nach einem der Ansprüche 13 bis 16, wobei die Vergrößerung des ersten Bildaufnahmesystems (110) kleiner ist als die Vergrößerung des zweiten Bildaufnahmesystems (120).

18. Werkzeugmaschine nach einem der Ansprüche 13 bis 17, wobei die Tiefenschärfe (DOF1) des ersten Bildaufnahmesystems (110) größer oder gleich 0,8 Millimeter ist.

19. Werkzeugmaschine nach einem der Ansprüche 13 bis 18, wobei die Tiefenschärfe (DOF2) des zweiten Bildaufnahmesystems (120) kleiner oder gleich 0,1 Millimeter ist.

20. Werkzeugmaschine nach einem der Ansprüche 1 bis 19, wobei;
- das erste Bildaufnahmesystem (110) so ausgebildet ist, dass seine Bildbrennebene so beschaffen ist, dass sie mit der Bezugsfläche (212) der ersten Struktur (210) übereinstimmt, und
- das zweite Bildaufnahmesystem (120) so ausgebildet ist, dass seine Bildbrennebene geeignet ist, die schräge Fläche (222) der dreidimensionalen Zielvorrichtung (200) zu schneiden.

21. Werkzeugmaschine nach einem der Ansprüche 13 bis 20, wobei die optische Vorrichtung (10) außerdem ein drittes Bildaufnahmesystem (130) umfasst, das an dem Werkzeughalter (310) angeordnet und so ausgebildet ist, dass es die Ausrichtung der Nutzfläche (202) der Zielvorrichtung (200) und/oder die Winkelausrichtung des Werkzeughalters (310) erfasst.

22. Verfahren zur dreidimensionalen optischen Messung in drei orthogonalen Richtungen X, Y und Z im dreidimensionalen Raum einer Werkzeugmaschine zwischen einem Werkzeughalter (310) und einem Werkstückträger (320), die in der Hauptrichtung Z zueinander ausgerichtet und voneinander beabstandet sind, umfassend die Schritte :
- bereitstellen eines optischen Systems (100) mit einem Bilderfassungssystem, wobei das optische System (100) ein erstes Bildaufnahmesystem (110) und ein zweites Bildaufnahmesystem (120) umfasst, wobei das optische System (100) derart angeordnet ist, dass die Differenz zwischen der Brennweite des zweiten Bildaufnahmesystems (120) und der Brennweite des ersten Bildaufnahmesystems (110) zwischen dem Mindestabstand und dem Höchstabstand liegt, der die Bezugsfläche (212) von der schrägen Fläche (222) trennt,
- montieren eines optischen Systems (100) auf dem Werkstückträger (320),
- bereitstellen einer dreidimensionalen Zielvorrichtung (200), die eine Nutzfläche (202) umfasst, welche eine Positionierungsreferenz bildet, wobei die Nutzfläche (202) umfasst:
* eine erste Struktur (210), die eine ebene Bezugsfläche (212) ausbildet, die verteilt ist zwischen mindestens:
- einem ersten Abschnitt (214), dessen Oberfläche mit ersten Reflexionsparametern reflektierend ist, und
- einem zweiten Abschnitt (216), dessen Oberfläche mit zweiten Reflexionsparametern, die sich von den ersten Reflexionsparametern unterscheiden, reflektierend ist, und
* eine zweite Struktur (220), die eine schräge Seite (222) in Bezug auf die genannte ebene Bezugsfläche aufweist,
- montieren der Zielvorrichtung (200) auf dem Werkzeughalter (310),
- anordnen des Werkzeughalters (310) und des Werkstückträgers (320) so, dass die Zielvorrichtung (200) eingerichtet ist, sich in der optischen Achse (O) des optischen Systems (100) zu positionieren, und so, dass einerseits die Brennweite des ersten Bildaufnahmesystems (110) ausgebildet ist, den Bildbrennpunkt des ersten Bildaufnahmesystems (110) in der optischen Achse (O) des optischen Systems (100) zu positionieren, und andererseits die Brennweite des zweiten Bildaufnahmesystems (110) ausgebildet ist, den Bildbrennpunkt des zweiten Bildaufnahmesystems (110) in der optischen Achse (O) des ersten Bildaufnahmesystems (110) zu positionieren, platzieren des Bildaufnahmesystem (110) auf der ersten Struktur (210) der Zielvorrichtung (200), und dass andererseits die Brennweite des zweiten Bildaufnahmesystems (120) derart ausgebildet ist, dass diese den Bildfokus des zweiten Bildaufnahmesystems (120) auf der zweiten Struktur (220) der Zielvorrichtung (200) zu platzieren geeignet ist,
- durchführen eines einzigen Schritts der Bildaufnahme der Zielvorrichtung (200) mit dem optischen System (100), das derart angeordnet ist, dass es mit der Zielvorrichtung (200) zusammenwirkt, wodurch die relative dreidimensionale Position zwischen dem Werkstückträger (320) des zu bearbeitenden Werkstücks und dem Werkzeughalter (310) bestimmt wird, und wobei bei dem Schritt der Bildaufnahme mit dem optischen System (100), mindestens eine Bildaufnahme gleichzeitig mit dem ersten Bildaufnahmesystem (110) des optischen Systems (100) und mit dem zweiten Bildaufnahmesystem (120) des optischen Systems (100) durchgeführt wird, wodurch für jede Bildaufnahme durch das optische System (100) einerseits das erste Bildaufnahmesystem (110) ein erstes Bild der Zielvorrichtung (200) erzeugt, das es ermöglicht, auf der Bezugsfläche (212) die Position des zweiten Abschnitts (216) in Bezug auf den ersten Abschnitt (214) zu identifizieren, was erstens eine erste Information über die relative Position gemäß der X-Richtung der Zielvorrichtung (200) in Bezug auf das erste Bildaufnahmesystem (110) und zweitens eine zweite Information über die relative Position zwischen der Zielvorrichtung (200) und dem ersten Bildaufnahmesystem (110) gemäß der Y-Richtung liefert, und andererseits das zweite Bildaufnahmesystem (120) ein zweites Bild der Zielvorrichtung (200) erzeugt, das einen scharfen Abschnitt umfasst, der einer Stelle der schrägen Fläche (222) der zweiten Struktur entspricht, wodurch eine dritte Information über den Abstand zwischen der Zielvorrichtung (200) und dem zweiten Bildaufnahmesystem (120) in der Z-Richtung bereitgestellt wird.

23. Messverfahren nach Anspruch 22, wobei :
- die Oberfläche des ersten Abschnitts (214) diffus reflektierend ist, und die Oberfläche des zweiten Abschnitts (216) spiegelnd reflektierend ist,
- in dem optischen System (100) die Tiefenschärfe des ersten Bildaufnahmesystems (110) mindestens 10-mal größer ist als die Tiefenschärfe des zweiten Bildaufnahmesystems (120), und
- das optische System (100) so ausgebildet ist, dass der optische Pfad des ersten Bildaufnahmesystems (110) und der optische Pfad des zweiten Bildaufnahmesystems (120) einen gemeinsamen Abschnitt aufweisen, der die Bildbrennebene des ersten Bildaufnahmesystems (110) und die Bildbrennebene des zweiten Bildaufnahmesystems (120) umfasst.

24. Messverfahren nach einem der Ansprüche 22 oder 23, wobei der zweite Abschnitt (216) der ebenen Bezugsfläche (212) in eine Reihe von ortsbegrenzten Bereichen (217) aufgeteilt ist, die in dem ersten Abschnitt (214) positioniert sind, und wobei, wenn das erste Bildaufnahmesystem (110) ein erstes Bild der Zielvorrichtung (200) erzeugt, die Position der ortsbegrenzte Bereiche (217) des zweiten Abschnitts (216) auf der Bezugsfläche (212) identifiziert wird, was eine Information über die relative Position zwischen den ortsbegrenzten Bereichen (217) und dem ersten Bildaufnahmesystem (110) liefert, die es ermöglicht, die relative Messung in der Y-Richtung und in der X-Richtung zu ermitteln.

## Claims

1. Machine-tool comprising a machining module (300) equipped with a tool-holder (310) and a work-holder (320), and an optical measuring device (10) for the three-dimensional measurement of the relative position between said tool-holder (310) and said work-holder (320), said optical measuring device (10) comprising :
- an optical system (100) with an image acquisition system, mounted on the work-holder (320) and :
- a three-dimensional target (200) mounted on the tool-holder (310) and comprising a useful face (202) forming a positioning reference that can be placed in the optical axis (O) of the optical system (100), said useful face (202) supporting:
* a first structure (210) defining a planar reference face (212) divided up between at least:
- a first portion (214) whose surface is reflective according to first reflection parameters, and
- a second portion (216) whose surface is reflective according to second reflection parameters different from the first reflection parameters, and
* a second structure (220) having a face (222) that is inclined relative to said planar reference face (212),
and in which said optical system (100) comprises a first exposure system (110) and a second exposure system (120), in which the difference between the focal distance of the second exposure system (120) and the focal distance of the first exposure system (110) lies between the minimum distance and the maximum distance separating the reference face (212) from the inclined face (222),
in which said optical measuring device (10) is configured to make it possible, through a single step of exposure of the target (200) by the optical system (100), to determine the three-dimensional relative position between the holder (320) of the workpiece to be machined and the tool-holder (310).

2. Machine-tool according to Claim 1, in which the surface of said first portion (214) is reflective according to a diffuse reflection, and the surface of said second portion (216) is reflective according to a specular reflection.

3. Machine-tool according to any one of Claim 1 and 2, in which said second portion (216) is divided up according to a series of localized zones (217) positioned in the first portion (214).

4. Machine-tool according to any one of Claims 1 to 3, in which the surface of said inclined face (222) has relief elements (224) or else specular elements (225) that are evenly distributed.

5. Machine-tool according to Claim 3, in which said localized zones (217) define between them a geometrical figure belonging to the following list: quadrilateral, parallelogram, rectangle, square, rhombus, regular polygon and circle.

6. Machine-tool according to Claim 3, in which said localized zones (217) of said second portion (216) are formed by islands or segments distributed in the first portion (214)

7. Machine-tool according to any one of Claims 1 to 6, in which the first structure (210) and the second structure (220) are positioned on the useful face (202) concentrically to one another.

8. Machine-tool according to any one of Claims 1 to 7, in which the first structure (210) surrounds the second structure (220).

9. Machine-tool according to Claim 3, in which said localized zones (217) of the second portion (216) of the first structure (210) define a square which surrounds the second structure (220).

10. Machine-tool according to any one of Claims 1 to 9 in which the first structure (210) delimits an aperture (218) for a housing (219) housing said second structure (220) and, in which the second structure (220) is positioned in said housing (219) with the inclined face (222) which is set back relative to the reference face (212) of said first structure (210).

11. Machine-tool according to any one of Claims 1 to 10, in which the surface of the inclined face (222) of the second structure (220) is striated, in particular the surface of the inclined face (222) of the second structure (220) is covered by one of the following elements: etched network, structured grid or network of specular lines (225).

12. Machine-tool according to one of Claims 1 to 11, in which said optical measuring device (10) also comprises a light source oriented towards the three-dimensional target (200), said light source being positioned in order to constitute a lateral illumination of the three-dimensional target (200).

13. Machine-tool according to one of Claims 1 to 12, in which the optical system (100) comprises a first exposure system (110) and a second exposure system (120), in which:
- the depth of field of the first exposure system (110) is at least 10 times greater than the depth of field of the second exposure system (120), and
- the optical system (100) is arranged such that the optical path of the first exposure system (110) and the optical path of the second exposure system (120) have a common section placed on the optical axis (O) of the optical system (100) and comprising the image focal plane of the first exposure system (110) and the image focal plane of the second exposure system (120).

14. Machine-tool according to the preceding claim, in which the optical system (100) is arranged such that the optical path from the object passes through at least a portion of one out of the first and the second exposure systems (120) before reaching the other of the first and the second exposure systems (120).

15. Machine-tool according to Claim 13 or 14, in which the first and the second exposure systems (120) are positioned in parallel to one another and in that the optical system (100) also comprises an optical module (128) positioned between the first and the second exposure systems (120) and configured to deflect some of the light rays passing through at least a part of one out of the first and the second exposure systems (120) to the other out of the first and the second exposure systems (120).

16. Machine-tool according to any one of Claims 13 to 15, in which the focal distance of the second exposure system (120) is greater than the focal distance of the first exposure system (110).

17. Machine-tool according to any one of Claims 13 to 16, in which the enlargement of the first exposure system (110) is less than the enlargement of the second exposure system (120).

18. Machine-tool according to any one of Claims 13 to 17, in which the depth of field (DOF1) of the first exposure system (110) is greater than or equal to 0.8 millimetres.

19. Machine-tool according to any one of Claims 13 to 18, in which the depth of field (DOF2) of the second exposure system (120) is less than or equal to 0.1 millimetres.

20. Machine-tool according to any one of Claims 1 and 19, in which:
- the first exposure system (110) is configured such that its image focal plane can correspond to the reference face (212) of the first structure (210), and
- the second exposure system (120) is configured such that its image focal plane can be secant with the inclined face (222) of the three-dimensional target (200).

21. Machine-tool according to one of Claims 13 to 20, in which the optical device (10) also comprises a third exposure system(130) positioned on the tool-holder (310) and configured to register the orientation of the useful face (202) of the target (200) and/or the angular orientation of the tool-holder (310).

22. Method for three-dimensional optical measurement according to three orthogonal directions X, Y and Z in the three-dimensional space of a machine-tool, between a tool-holder (310) and a work-holder (320) that are aligned and remote from one another in the main direction Z, in which:
- an optical system (100) is provided with an image acquisition system, said optical system (100) comprising a first exposure system (110) and a second exposure system (120), said optical system (100) is arranged such that the difference between the focal distance of the second exposure system (120) and the focal distance of the first exposure system (110) lies between the minimum distance and the maximum distance separating the reference face (212) from the inclined face (222),
- said optical system (100) is mounted on the work-holder (320),
- a three-dimensional target (200) is provided comprising a useful face (202) forming a positioning reference, said useful face (202): comprising
* a first structure (210) defining a planar reference face (212) divided up between at least:
- a first portion (214) whose surface is reflective according to first reflection parameters, and
- a second portion (216) whose surface is reflective according to second reflection parameters different from the first reflection parameters, and
* a second structure (220) having a face (222) that is inclined relative to said planar reference face,
- said target (200) is mounted on the tool-holder (310),
- the tool-holder (310) and the work-holder (320) are positioned such that the target (200) can be placed in the optical axis (O) of the optical system (100) and such that, on the one hand, the focal distance of the first exposure system (110) can place the image focus of the first exposure system (110) on the first structure (210) of the target (200) and that, on the other hand, the focal distance of the second exposure system (120) can place the image focus of the second exposure system (120) on the second structure (220) of the target (200),
- a single step of exposure of the target (200) is performed with the optical system (100) positioned so as to cooperate with the target (200), whereby the three-dimensional relative position between the holder (320) of the workpiece to be machined and the tool-holder (310) is determined, and wherein in said step of exposure with the optical system (100), at least one exposure is taken simultaneously with the first exposure system (110) of the optical system (100) and with the second exposure system (120) of the optical system (100), whereby, for each exposure by the optical system (100), on the one hand, the first exposure system (110) generates a first image of the target (200) making it possible to identify, on the reference face (212), the position of the second portion (216) relative to the first portion (214), which gives, firstly, a first piece of information on the relative position according to the direction X of the target (200) relative to the first exposure system (110) and, secondly, a second piece of information on the relative position between the target (200) and the first exposure system (110) according to the direction Y, and, on the other hand, the second exposure system (120) generates a second image of the target (200) comprising a sharp portion corresponding to a location of the inclined face (222) of the second structure, which gives a third piece of information on the distance between said target (200) and said second exposure system (120) according to the direction Z.

23. Measurement method according to Claim 22, in which:
- said surface of said first portion (214) is reflective according to a diffuse reflection, and
said surface of said second portion (216) is reflective according to a specular reflection
- in said optical system (100):
- the depth of field of the first exposure system (110) is at least 10 times greater than the depth of field of the second exposure system (120), and
- said optical system (100) is arranged such that the optical path of the first exposure system (110) and the optical path of the second exposure system (120) have a common section comprising the image focal plane of the first exposure system (110) and the image focal plane of the second exposure system (120) .

24. Measurement method according to one of Claims 22 or 23, in which said second portion (216) of the planar reference face (212) is divided up according to a series of localized zones (217) positioned in the first portion (214) and in which, when said first exposure system (110) generates a first image of the target (200), the position of the localized zones (217) of the second portion (216) is identified on the reference face (212), which gives a piece of information on the relative position between said localized zones (217) and the first exposure system (110) making it possible to deduce the relative measurement according to the direction Y and according to the direction X.
